# EUROPEAN PATENT APPLICATION

(11) **EP 4 770 144 A1**
(43) Date of publication of application: **01.07.2026**
(21) Application number: 24870570.9
(22) Date of filing: 19.09.2024
(51) Int. Cl.: H04W 4/06

(54) **COMMUNICATION METHOD AND APPARATUS**

(30) Priority: 28.09.2023 CN 202311292782
(71) Applicant: HUAWEI TECHNOLOGIES CO., LTD., Shenzhen 518129 (CN)
(72) Inventor: ZHANG, Haisen, Shenzhen, Guangdong 518129 (CN); WANG, Yan, Shenzhen, Guangdong 518129 (CN); CHEN, Lei, Shenzhen, Guangdong 518129 (CN); XU, Bin, Shenzhen, Guangdong 518129 (CN); LI, Bingzhao, Shenzhen, Guangdong 518129 (CN)
(74) Representative: Pfenning, Meinig & Partner mbB
(86) International application number: PCT/CN2024/119788
(87) International publication number: WO 2025/067026

(57) **Abstract**

This application relates to the communication field, and discloses a communication method and apparatus. The method includes: A first network device sends an RRC release message to a terminal device that joins a multicast session, where the RRC release message indicates the terminal device to be released to a non-connected state; and the first network device sends indication information to a second network device, where the indication information indicates whether a multicast and broadcast radio bearer needs to be reconfigured for the terminal device. Based on the indication information, the second network device reconfigures the multicast and broadcast radio bearer for the terminal device, or does not reconfigure the multicast and broadcast radio bearer for the terminal device. In this application, the indication information can be sent to the second network device, to provide the second network device with a basis for determining whether to reconfigure the multicast and broadcast radio bearer for the terminal device.

## Description

This application claims priority to Chinese Patent Application No. 202311292782.6, filed on September 28, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A multicast service is a manner in which service data may be transmitted to a plurality of terminal devices in a group in a multicast manner. A terminal device may receive multicast service data in a connected state. In some user-dense scenarios, such as concerts, stadiums, and other public safety scenarios, when a quantity of multicast users (namely, a quantity of UEs) in a cell is excessively large, and may exceed a quantity of connected-state users that can be accommodated in the cell, network congestion occurs and user service experience is affected. To alleviate network congestion, a base station may be enabled to support a terminal device that joins a multicast session in receiving a multicast service in a non-connected state.

Usually, a reason why the terminal device is released to the non-connected state includes service deactivation or the network congestion mentioned above. When a terminal device accesses a new cell from an old cell, and a base station (which may be referred to as a new base station) corresponding to the new cell is different from a base station (which may be referred to as an old base station) corresponding to the old cell, if the terminal device is released to a non-connected state due to service deactivation, the new base station may not reconfigure a multicast and broadcast radio bearer. If the terminal device is released to the non-connected state to receive a multicast service due to network congestion, because multicast and broadcast radio bearers of the old and new cells may be different, or because the terminal device continues to use the multicast and broadcast radio bearer to receive data in the non-connected state, a radio bearer configuration in the terminal device may be changed. The new cell cannot determine whether the multicast and broadcast radio bearer configuration on a terminal device side is changed, cannot determine whether the terminal device can continue to use, in the new cell, the multicast and broadcast radio bearer used in the old cell, or cannot determine the multicast and broadcast radio bearer configuration stored on the terminal device side, so that the new base station needs to reconfigure the multicast and broadcast radio bearer.

Currently, the new base station cannot distinguish whether the accessed terminal device is released to the non-connected state because the service is deactivated or the terminal device is released to the non-connected state to receive the multicast service. As a result, the new base station cannot determine how to configure the multicast and broadcast radio bearer, and there is no feasible solution for resolving a problem of reconfiguring the multicast and broadcast radio bearer.

### SUMMARY

This application provides a communication method and apparatus, so that indication information can be sent to a second network device, to provide the second network device with a basis for determining whether to reconfigure a multicast and broadcast radio bearer for a terminal device.

According to a first aspect, this application provides a communication method, which may be applied to a first network device. The method includes: sending a radio resource control release message to a terminal device that joins a multicast session, where the radio resource control release message indicates the terminal device to be released to a non-connected state; and sending indication information to a second network device, where the indication information indicates whether a multicast and broadcast radio bearer needs to be reconfigured for the terminal device.

In this method, the first network device sends the indication information to the second network device, to indicate whether the second network device needs to reconfigure the multicast and broadcast radio bearer for the terminal device that joins the multicast session, so that when the terminal device accesses the second network device, the second network device can determine whether to reconfigure the multicast and broadcast radio bearer for the terminal device. Therefore, a decision basis for reconfiguring the multicast and broadcast radio bearer is provided for the second network device.

In a possible design, when the terminal device is released to the non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In this design, for a scenario in which the terminal device is released to the non-connected state to receive the multicast service and access the second network device, the second network device may reconfigure the multicast and broadcast radio bearer for the terminal device. In a scenario in which the terminal device accesses the second network device after the terminal device is released to the non-connected state because the multicast session joined by the terminal device has no data temporarily or the multicast session is deactivated, the second network device may not reconfigure the multicast and broadcast radio bearer for the terminal device, so that some signaling overheads are reduced.

In a possible design, the indication information specifically indicates whether the terminal device is released to the non-connected state to receive the multicast service; the indication information specifically indicates information about the multicast service received by the terminal device that is released to the non-connected state; or the indication information includes suspension configuration information, where the suspension configuration information indicates information about the multicast service received by the terminal device that is released to the non-connected state.

In this design, the indication information indicates whether the terminal device is released to the non-connected state to receive the multicast service, so that the second network device can be indicated, by using small signaling overheads, whether the multicast and broadcast radio bearer needs to be reconfigured for the terminal device. When reconfiguring the multicast and broadcast radio bearer for the terminal device, the second network device may reconfigure the MRB for all multicast services received by the terminal device. The indication information indicates the information about the multicast service received by the terminal device that is released to the non-connected state, so that the second network device can be indicated to accurately reconfigure the multicast and broadcast radio bearer for the multicast service received by the terminal device that is released to the connected state. The suspension configuration information indicates the information about the multicast service received by the terminal device that is released to the non-connected state, so that the second network device can also be indicated to accurately reconfigure the multicast and broadcast radio bearer for the multicast service received by the terminal device that is released to the connected state.

In a possible design, the indication information includes the radio resource control connection release message, and the radio resource control connection release message includes the suspension configuration information.

In this design, the first network device may alternatively use the RRC release message as the indication information, and indicate, to the second network device by using the suspension configuration information in the RRC release message, the information about the multicast service received by the terminal device that is released to the non-connected state. The RRC release message is used as the indication information, so that the second network device can also be accurately indicated to reconfigure the multicast and broadcast radio bearer for the multicast service received by the terminal device that is released to the connected state.

In a possible design, the method further includes: determining capability information of the second network device, where the capability information includes whether sending of the multicast service to the terminal device in the non-connected state is supported.

The sending the indication information to the second network device includes: sending the indication information to the second network device when the second network device supports sending of the multicast service to the terminal device in the non-connected state.

In this design, the first network device may send the indication information to only the second network device that supports sending of the multicast service to the terminal device in the non-connected state, to indicate whether the second network device needs to reconfigure the multicast and broadcast radio bearer for the terminal device. The indication information may not need to be sent to the second network device that does not support sending of the multicast service to the terminal device in the non-connected state, so that a waste of signaling can be reduced.

In a possible design, the determining the capability information of the second network device includes: when an Xn interface with the second network device is established or modified, determining the capability information of the second network device; determining the capability information of the second network device based on a terminal device context transfer request message from the second network device; or determining the capability information of the second network device based on operations, administration, and maintenance configuration information.

In this design, when the Xn interface with the second network device is established or modified, the first network device determines the capability information of the second network device, so that the capability information of the second network device may be learned of by using a control plane message or a user plane message of the Xn interface, to reduce signaling overheads. The first network device determines the capability information of the second network device based on the terminal device context transfer request message from the second network device, so that the capability information of the second network device may be learned of by using the terminal device context transfer request message, and signaling overheads may also be reduced. The capability information of the second network device is synchronized to the first network device by using the OAM configuration information, and no other message needs to be used, so that signaling overheads can also be reduced.

In a possible design, the sending the indication information to the second network device includes: sending, to the second network device, a terminal device context transfer response message corresponding to the terminal device, where the terminal device context transfer response message includes the indication information; sending the indication information to at least one network device in a wireless coverage area of the first network device, where the at least one network device includes the second network device; or sending the indication information to the second network device by using a paging message.

In this design, the first network device sends the indication information to the second network device by using the terminal device context transfer response message, to indicate whether the MRB needs to be reconfigured for the terminal device. The indication information may be sent by using an existing message, so that signaling overheads can be reduced, and implementation costs can be reduced.

According to a second aspect, an embodiment of this application provides a communication apparatus. The apparatus has a function of implementing the method according to the first aspect. The function may be implemented by hardware, or may be implemented by executing corresponding software by hardware. The hardware or the software includes one or more units or modules corresponding to the function of the method according to the first aspect, for example, a sending unit.

The sending unit is configured to send a radio resource control release message to a terminal device that joins a multicast session, where the radio resource control release message indicates the terminal device to be released to a non-connected state. The sending unit is further configured to send indication information to a second network device, where the indication information indicates whether a multicast and broadcast radio bearer needs to be reconfigured for the terminal device.

In a possible design, when the terminal device is released to the non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In a possible design, the indication information specifically indicates whether the terminal device is released to the non-connected state to receive the multicast service; the indication information specifically indicates information about the multicast service received by the terminal device that is released to the non-connected state; or the indication information includes suspension configuration information, where the suspension configuration information indicates information about the multicast service received by the terminal device that is released to the non-connected state.

In a possible design, the indication information includes the radio resource control connection release message, and the radio resource control connection release message includes the suspension configuration information.

In a possible design, the apparatus further includes a processing unit, configured to determine capability information of the second network device, where the capability information includes whether sending of the multicast service to the terminal device in the non-connected state is supported.

The sending unit is specifically configured to send the indication information to the second network device when the second network device supports sending of the multicast service to the terminal device in the non-connected state.

In a possible design, the processing unit is specifically configured to: when an Xn interface with the second network device is established or modified, determine the capability information of the second network device; determine the capability information of the second network device based on a terminal device context transfer request message from the second network device; or determine the capability information of the second network device based on operations, administration, and maintenance configuration information.

In a possible design, the sending unit is specifically configured to: send, to the second network device, a terminal device context transfer response message corresponding to the terminal device, where the terminal device context transfer response message includes the indication information; send the indication information to at least one network device in a wireless coverage area of the first network device, where the at least one network device includes the second network device; or send the indication information to the second network device by using a paging message.

According to a third aspect, this application further provides a communication apparatus, including a processor, configured to execute computer instructions stored in a memory. When the computer instructions are executed, the apparatus is caused to perform the method according to any one of the first aspect or the possible designs of the first aspect.

According to a fourth aspect, this application further provides a communication apparatus, including a processor and an interface circuit. The processor is configured to: communicate with another apparatus through the interface circuit, and perform the method according to any one of the first aspect or the possible designs of the first aspect.

The communication apparatus according to the second aspect to the fourth aspect may be used in a network device, for example, a first network device.

According to a fifth aspect, this application further provides a computer-readable storage medium, including computer software instructions. When the computer software instructions are run on a network device or a chip built in the network device, the network device is caused to perform the method according to any one of the first aspect or the possible designs of the first aspect.

It may be understood that for beneficial effects that can be achieved in the second aspect to the fifth aspect, refer to the beneficial effects in any one of the first aspect and the possible designs of the first aspect. Details are not described herein again.

According to a sixth aspect, this application provides a communication method, which may be applied to a second network device. The method includes: receiving indication information from a first network device, where the indication information indicates whether a multicast and broadcast radio bearer needs to be reconfigured for a terminal device, and the terminal device is a terminal device that joins a multicast session; and when the indication information indicates that the multicast and broadcast radio bearer needs to be reconfigured for the terminal device, sending a reconfigured multicast and broadcast radio bearer to the terminal device.

In the method, the second network device may determine, based on the indication information, whether to reconfigure a multicast and broadcast radio bearer for the terminal device that joins the multicast session.

In a possible design, when the terminal device is released to the non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In this design, for a scenario in which the terminal device is released to the non-connected state to receive the multicast service and access the second network device, the second network device may reconfigure the multicast and broadcast radio bearer for the terminal device. In a scenario in which the terminal device accesses the second network device after the terminal device is released to the non-connected state because the multicast session joined by the terminal device has no data temporarily or the multicast session is deactivated, the second network device may not reconfigure the multicast and broadcast radio bearer for the terminal device, so that some signaling overheads are reduced.

In a possible design, the indication information specifically indicates whether the terminal device is released to the non-connected state to receive the multicast service; the indication information specifically indicates information about the multicast service received by the terminal device that is released to the non-connected state; or the indication information includes suspension configuration information, where the suspension configuration information indicates information about the multicast service received by the terminal device that is released to the non-connected state.

When the indication information indicates that the terminal device is released to the non-connected state to receive the multicast service, the sending the reconfigured multicast and broadcast radio bearer to the terminal device includes: sending, to the terminal device, a multicast and broadcast radio bearer reconfigured for all multicast services of the terminal device.

Alternatively, when the indication information indicates the information about the multicast service received by the terminal device that is released to the non-connected state, or the indication information includes the suspension configuration information, the sending the reconfigured multicast and broadcast radio bearer to the terminal device includes: sending, to the terminal device, the multicast and broadcast radio bearer reconfigured for the multicast service received by the terminal device that is released to the connected state.

In this design, the indication information indicates whether the terminal device is released to the non-connected state to receive the multicast service, so that the second network device can be indicated, by using small signaling overheads, whether the multicast and broadcast radio bearer needs to be reconfigured for the terminal device. When reconfiguring the multicast and broadcast radio bearer for the terminal device, the second network device may reconfigure the MRB for all multicast services received by the terminal device. The indication information indicates the information about the multicast service received by the terminal device that is released to the non-connected state, so that the second network device can be indicated to accurately reconfigure the multicast and broadcast radio bearer for the multicast service received by the terminal device that is released to the connected state. The suspension configuration information indicates the information about the multicast service received by the terminal device that is released to the non-connected state, so that the second network device can also be indicated to accurately reconfigure the multicast and broadcast radio bearer for the multicast service received by the terminal device that is released to the connected state.

In a possible design, the indication information includes a radio resource control connection release message, and the radio resource control connection release message includes the suspension configuration information.

In this design, the first network device may alternatively use the RRC release message as the indication information, and indicate, to the second network device by using the suspension configuration information in the RRC release message, the information about the multicast service received by the terminal device that is released to the non-connected state. The RRC release message is used as the indication information, so that the second network device can also be accurately indicated to reconfigure the multicast and broadcast radio bearer for the multicast service received by the terminal device that is released to the connected state.

In a possible design, the second network device supports sending of the multicast service to the terminal device in the non-connected state.

In this design, the first network device may send the indication information to only the second network device that supports sending of the multicast service to the terminal device in the non-connected state, to indicate whether the second network device needs to reconfigure the multicast and broadcast radio bearer for the terminal device. The indication information may not need to be sent to the second network device that does not support sending of the multicast service to the terminal device in the non-connected state, so that a waste of signaling can be reduced.

In a possible design, the method further includes: when an Xn interface with the first network device is established or modified, sending capability information of the second network device to the first network device; sending a terminal device context transfer request message to the first network device, where the terminal device context transfer request message includes capability information of the second network device; or operations, administration, and maintenance configuration information includes capability information of the second network device, where
the capability information includes whether sending of the multicast service to the terminal device in the non-connected state is supported.

In this design, when the Xn interface with the second network device is established or modified, the first network device determines the capability information of the second network device, so that the capability information of the second network device may be learned of by using a control plane message or a user plane message of the Xn interface, to reduce signaling overheads. The first network device determines the capability information of the second network device based on the terminal device context transfer request message from the second network device, so that the capability information of the second network device may be learned of by using the terminal device context transfer request message, and signaling overheads may also be reduced. The capability information of the second network device may be synchronized to the first network device by using the OAM configuration information, and no other message needs to be used, so that signaling overheads can also be reduced.

In a possible design, the receiving the indication information from the first network device includes: receiving, from the first network device, a terminal device context transfer response message corresponding to the terminal device, where the terminal device context transfer response message includes the indication information; or receiving a paging message sent by the first network device, where the paging message includes the indication information.

In this design, the first network device sends the indication information to the second network device by using the terminal device context transfer response message, to indicate whether the MRB needs to be reconfigured for the terminal device. The indication information may be sent by using an existing message, so that signaling overheads can be reduced, and implementation costs can be reduced.

According to a seventh aspect, this application provides a communication apparatus, which may be used in a second network device. The apparatus has a function of implementing the method according to the sixth aspect. The function may be implemented by hardware, or may be implemented by executing corresponding software by hardware. The hardware or the software includes one or more units or modules corresponding to the function of the method according to the sixth aspect, for example, a receiving unit and a sending unit.

The receiving unit is configured to receive indication information from a first network device, where the indication information indicates whether a multicast and broadcast radio bearer needs to be reconfigured for a terminal device, and the terminal device is a terminal device that joins a multicast session. The sending unit is configured to: when the indication information indicates that the multicast and broadcast radio bearer needs to be reconfigured for the terminal device, send a reconfigured multicast and broadcast radio bearer to the terminal device.

In a possible design, when the terminal device is released to a non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In a possible design, the indication information specifically indicates whether the terminal device is released to the non-connected state to receive the multicast service; the indication information specifically indicates information about the multicast service received by the terminal device that is released to the non-connected state; or the indication information includes suspension configuration information, where the suspension configuration information indicates information about the multicast service received by the terminal device that is released to the non-connected state.

When the indication information indicates that the terminal device is released to the non-connected state to receive the multicast service, the sending unit is specifically configured to send, to the terminal device, a multicast and broadcast radio bearer reconfigured for all multicast services of the terminal device.

Alternatively, when the indication information indicates the information about the multicast service received by the terminal device that is released to the non-connected state, or the indication information includes the suspension configuration information, the sending unit is specifically configured to send, to the terminal device, a multicast and broadcast radio bearer reconfigured for the multicast service received by the terminal device that is released to the connected state.

In a possible design, the indication information includes a radio resource control connection release message, and the radio resource control connection release message includes the suspension configuration information.

In a possible design, the second network device supports sending of the multicast service to the terminal device in the non-connected state.

In a possible design, the sending unit is further configured to: when an Xn interface with the first network device is established or modified, send capability information of the second network device to the first network device; send a terminal device context transfer request message to the first network device, where the terminal device context transfer request message includes capability information of the second network device; or operations, administration, and maintenance configuration information includes capability information of the second network device, where
the capability information includes whether sending of the multicast service to the terminal device in the non-connected state is supported.

In a possible design, the receiving unit is specifically configured to: receive, from the first network device, a terminal device context transfer response message corresponding to the terminal device, where the terminal device context transfer response message includes the indication information; or receive a paging message sent by the first network device, where the paging message includes the indication information.

According to an eighth aspect, this application further provides a communication apparatus, including: a processor, configured to execute computer instructions stored in a memory. When the computer instructions are executed, the apparatus is caused to perform the method according to any one of the sixth aspect or the possible designs of the sixth aspect.

According to a ninth aspect, this application further provides a communication apparatus, including a processor and an interface circuit. The processor is configured to: communicate with another apparatus through the interface circuit, and perform the method according to any one of the sixth aspect or the possible designs of the sixth aspect.

The communication apparatus according to the seventh aspect to the ninth aspect may be used in a network device, for example, a second network device.

According to a tenth aspect, this application further provides a computer-readable storage medium, including computer software instructions. When the computer software instructions are run on a network device or a chip built in the network device, the network device is caused to perform the method according to any one of the sixth aspect or the possible designs of the sixth aspect.

It may be understood that, for beneficial effects that can be achieved in the seventh aspect to the tenth aspect, refer to the beneficial effects in any one of the sixth aspect and the possible designs of the sixth aspect. Details are not described herein again.

According to an eleventh aspect, this application provides a communication method, which may be applied to a terminal device, for example, a terminal device that joins a multicast session. The method includes: receiving a radio resource control release message from a first network device, where the radio resource control release message indicates the terminal device to be released to a non-connected state; and sending indication information to a second network device, where the indication information indicates whether a multicast and broadcast radio bearer needs to be reconfigured for the terminal device.

In the method, the terminal device sends the indication information to the second network device, to indicate whether the second network device needs to reconfigure the MRB for the terminal device that joins the multicast session, so that when the terminal device accesses the second network device, the second network device can determine whether to reconfigure the MRB for the terminal device. Therefore, a decision basis for reconfiguring the MRB is provided for the second network device.

In a possible design, the indication information includes camped cell information of the terminal device, and the camped cell information indicates whether the multicast and broadcast radio bearer needs to be reconfigured for the terminal device.

In this design, the camped cell information of the terminal device may be used as the indication information, to indicate, to the second network device, whether the multicast and broadcast radio bearer needs to be reconfigured for the terminal device. The second network device is indicated, by using the camped cell information of the terminal device, whether the multicast and broadcast radio bearer needs to be reconfigured, the terminal device does not need to determine whether to reconfigure the MRB, and the terminal device provides only a decision basis for the second network device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

The terminal device may report only whether the terminal device has experienced an unsynchronized cell, to indicate whether the second network device is to reconfigure the multicast and broadcast radio bearer for the terminal device. This manner reduces more signaling, and delivers complexity to the terminal device.

In a possible design, the sending the indication information to the second network device includes: sending a radio resource control resume request message to the second network device, where the radio resource control resume request message includes the indication information; and/or sending a radio resource control resume complete message to the second network device, where the radio resource control resume complete message includes the indication information.

In this design, the indication information may be sent by using the radio resource control resume request message and/or the radio resource control resume complete message, so that an existing radio resource control resume request message and/or an existing radio resource control resume complete message can indicate, to the second network device, whether the multicast and broadcast radio bearer needs to be reconfigured for the terminal device, so that signaling overheads can be reduced and implementation costs can be reduced.

In a possible design, the method further includes: receiving a multicast and broadcast radio bearer reconfigured by the second network device for the terminal device.

According to a twelfth aspect, this application provides a communication apparatus. The apparatus has a function of implementing the method according to the eleventh aspect. The function may be implemented by hardware, or may be implemented by executing corresponding software by hardware. The hardware or the software includes one or more units or modules corresponding to the function of the method according to the eleventh aspect, for example, a receiving unit and a sending unit.

The receiving unit is configured to receive a radio resource control release message from a first network device, where the radio resource control release message indicates the terminal device to be released to a non-connected state, and the terminal device is a terminal device that joins a multicast session. The sending unit is configured to send indication information to a second network device, where the indication information indicates whether a multicast and broadcast radio bearer needs to be reconfigured for the terminal device.

In a possible design, the indication information includes camped cell information of the terminal device, and the camped cell information indicates whether the multicast and broadcast radio bearer needs to be reconfigured for the terminal device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

In a possible design, the sending unit is specifically configured to: send a radio resource control resume request message to the second network device, where the radio resource control resume request message includes the indication information; and/or send a radio resource control resume complete message to the second network device, where the radio resource control resume complete message includes the indication information.

In a possible design, the receiving unit is further configured to receive a multicast and broadcast radio bearer reconfigured by the second network device for the terminal device.

According to a thirteenth aspect, this application further provides a communication apparatus, including a processor, configured to execute computer instructions stored in a memory. When the computer instructions are executed, the apparatus is caused to perform the method according to any one of the eleventh aspect or the possible designs of the eleventh aspect.

According to a fourteenth aspect, this application further provides a communication apparatus, including a processor and an interface circuit. The processor is configured to: communicate with another apparatus through the interface circuit, and perform the method according to any one of the eleventh aspect or the possible designs of the eleventh aspect.

The communication apparatus according to the twelfth aspect to the fourteenth aspect may be used in a terminal device, for example, a terminal device that joins a multicast session.

According to a fifteenth aspect, this application further provides a computer-readable storage medium, including computer software instructions. When the computer software instructions are run on a terminal device or a chip built in the terminal device, the terminal device is caused to perform the method according to any one of the eleventh aspect or the possible designs of the eleventh aspect.

It may be understood that, for beneficial effects that can be achieved in the twelfth aspect to the fifteenth aspect, refer to the beneficial effects in any one of the eleventh aspect and the possible designs of the eleventh aspect. Details are not described herein again.

According to a sixteenth aspect, this application provides a communication method, which may be applied to a second network device. The method includes: receiving indication information from a terminal device, where the terminal device is a terminal device that joins a multicast session, and the indication information indicates whether a multicast and broadcast radio bearer needs to be reconfigured for the terminal device; and when the indication information indicates that the multicast and broadcast radio bearer needs to be reconfigured for the terminal device, sending a reconfigured multicast and broadcast radio bearer to the terminal device.

In the method, the terminal device sends the indication information to the second network device, to indicate whether the second network device needs to reconfigure the MRB for the terminal device that joins the multicast session, so that when the terminal device accesses the second network device, the second network device can determine whether to reconfigure the MRB for the terminal device. Therefore, a decision basis for reconfiguring the MRB is provided for the second network device.

In a possible design, the indication information includes camped cell information of the terminal device, and the camped cell information indicates whether the multicast and broadcast radio bearer needs to be reconfigured for the terminal device.

In this design, the camped cell information of the terminal device may be used as the indication information, to indicate, to the second network device, whether the multicast and broadcast radio bearer needs to be reconfigured for the terminal device. The second network device is indicated, by using the camped cell information of the terminal device, whether the multicast and broadcast radio bearer needs to be reconfigured, the terminal device does not need to determine whether to reconfigure the MRB, and the terminal device provides only a decision basis for the second network device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

The terminal device may report only whether the terminal device has experienced an unsynchronized cell, to indicate whether the second network device is to reconfigure the multicast and broadcast radio bearer for the terminal device. This manner reduces more signaling, and delivers complexity to the terminal device.

In a possible design, the receiving the indication information from the terminal device includes: receiving a radio resource control resume request message from the terminal device, where the radio resource control resume request message includes the indication information; and/or receiving a radio resource control resume complete message from the terminal device, where the radio resource control resume complete message includes the indication information.

In this design, the indication information may be sent by using the radio resource control resume request message and/or the radio resource control resume complete message, so that an existing radio resource control resume request message and/or an existing radio resource control resume complete message can indicate, to the second network device, whether the multicast and broadcast radio bearer needs to be reconfigured for the terminal device, so that signaling overheads can be reduced and implementation costs can be reduced.

According to a seventeenth aspect, this application provides a communication apparatus, which may be used in a second network device. The apparatus has a function of implementing the method according to the sixteenth aspect. The function may be implemented by hardware, or may be implemented by executing corresponding software by hardware. The hardware or the software includes one or more units or modules corresponding to the function of the method according to the sixteenth aspect, for example, a receiving unit and a sending unit.

The receiving unit is configured to receive indication information from a terminal device, where the terminal device is a terminal device that joins a multicast session, and the indication information indicates whether a multicast and broadcast radio bearer needs to be reconfigured for the terminal device. The sending unit is configured to: when the indication information indicates that the multicast and broadcast radio bearer needs to be reconfigured for the terminal device, send a reconfigured multicast and broadcast radio bearer to the terminal device.

In a possible design, the indication information includes camped cell information of the terminal device, and the camped cell information indicates whether the multicast and broadcast radio bearer needs to be reconfigured for the terminal device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

In a possible design, the receiving unit is specifically configured to: receive a radio resource control resume request message from the terminal device, where the radio resource control resume request message includes the indication information; and/or receive a radio resource control resume complete message from the terminal device, where the radio resource control resume complete message includes the indication information.

According to an eighteenth aspect, this application further provides a communication apparatus, including a processor, configured to execute computer instructions stored in a memory. When the computer instructions are executed, the apparatus is caused to perform the method according to any one of the sixteenth aspect or the possible designs of the sixteenth aspect.

According to a nineteenth aspect, this application further provides a communication apparatus, including a processor and an interface circuit. The processor is configured to: communicate with another apparatus through the interface circuit, and perform the method according to any one of the sixteenth aspect or the possible designs of the sixteenth aspect.

The communication apparatus according to the seventeenth aspect to the nineteenth aspect may be used in a network device, for example, a second network device.

According to a twentieth aspect, this application further provides a computer-readable storage medium, including computer software instructions. When the computer software instructions are run on a network device or a chip built in the network device, the network device is caused to perform the method according to any one of the sixteenth aspect or the possible designs of the sixteenth aspect.

It may be understood that, for beneficial effects that can be achieved in the seventeenth aspect to the twentieth aspect, refer to the beneficial effects in any one of the sixteenth aspect and the possible designs of the sixteenth aspect. Details are not described herein again.

According to a twenty-first aspect, this application further provides a communication apparatus, including a transceiver unit and a processing unit. The transceiver unit may be configured to send and receive information, or configured to communicate with another network element. The processing unit may be configured to process data. For example, the apparatus may implement, by using the transceiver unit and the processing unit, the method according to any one of the first aspect and the possible designs of the first aspect, the method according to any one of the sixth aspect or the possible designs of the sixth aspect, the method according to any one of the eleventh aspect or the possible designs of the eleventh aspect, or the method according to any one of the sixteenth aspect or the possible designs of the sixteenth aspect.

According to a twenty-second aspect, this application further provides a computer program product. When being executed, the computer program product may implement the method according to any one of the first aspect and the possible designs of the first aspect, the method according to any one of the sixth aspect or the possible designs of the sixth aspect, the method according to any one of the eleventh aspect or the possible designs of the eleventh aspect, or the method according to any one of the sixteenth aspect or the possible designs of the sixteenth aspect.

According to a twenty-third aspect, this application further provides a chip system. The chip system is used in a network device. The chip system includes one or more interface circuits and one or more processors. The interface circuit and the processor are interconnected through a line. The processor receives and executes computer instructions from a memory of an electronic device through the interface circuit, to implement the method according to any one of the first aspect and the possible designs of the first aspect, the method according to any one of the sixth aspect or the possible designs of the sixth aspect, or the method according to any one of the sixteenth aspect or the possible designs of the sixth aspect. The network device may be the foregoing first network device or second network device.

According to a twenty-fourth aspect, this application further provides a chip system. The chip system is used in a terminal device. The chip system includes one or more interface circuits and one or more processors. The interface circuit and the processor are interconnected through a line. The processor receives and executes computer instructions from a memory of an electronic device through the interface circuit, to implement the method according to any one of the eleventh aspect and the possible designs of the eleventh aspect.

According to a twenty-fifth aspect, this application further provides a communication system, including a first network device and a second network device. The first network device performs the method according to any one of the first aspect or the possible designs of the first aspect, and the second network device performs the method according to any one of the sixth aspect or the possible designs of the sixth aspect.

According to a twenty-sixth aspect, this application further provides a communication system, including a terminal device and a second network device. The terminal device performs the method according to any one of the eleventh aspect or the possible designs of the eleventh aspect, and the second network device performs the method according to any one of the sixteenth aspect or the possible designs of the sixteenth aspect.

It may be understood that, for beneficial effects that can be achieved in the twenty-first aspect to the twenty-sixth aspect provided above, refer to the beneficial effects in the first aspect, the sixth aspect, the eleventh aspect, the sixteenth aspect, and the like. Details are not described herein again.

### BRIEF DESCRIPTION OF DRAWINGS

FIG. 1 is a diagram of composition of an MBS service transmission architecture;
FIG. 2 is a diagram of multicast data transmission;
FIG. 3 is a diagram of composition of a communication system according to an embodiment of this application;
FIG. 4 is a diagram of composition of a network device according to an embodiment of this application;
FIG. 5 is a schematic flowchart of a communication method according to an embodiment of this application;
FIG. 6 is another schematic flowchart of a communication method according to an embodiment of this application;
FIG. 7 is still another schematic flowchart of a communication method according to an embodiment of this application;
FIG. 8 is still another schematic flowchart of a communication method according to an embodiment of this application;
FIG. 9 is still another schematic flowchart of a communication method according to an embodiment of this application;
FIG. 10 is still another schematic flowchart of a communication method according to an embodiment of this application;
FIG. 11 is still another schematic flowchart of a communication method according to an embodiment of this application;
FIG. 12 is still another schematic flowchart of a communication method according to an embodiment of this application;
FIG. 13 is a diagram of a structure of a communication apparatus according to an embodiment of this application;
FIG. 14 is another diagram of a structure of a communication apparatus according to an embodiment of this application;
FIG. 15 is still another diagram of a structure of a communication apparatus according to an embodiment of this application;
FIG. 16 is still another diagram of a structure of a communication apparatus according to an embodiment of this application; and
FIG. 17 is still another diagram of a structure of a communication apparatus according to an embodiment of this application.

### DESCRIPTION OF EMBODIMENTS

A multicast service is a manner in which service data may be transmitted to a plurality of terminal devices in a multicast group in a multicast manner. The terminal device may also be referred to as a user equipment (user equipment, UE). In an example, the multicast service may be a multicast and broadcast service/business (multicast and broadcast service, MBS). For example, the MBS service may be a live broadcast service, a public security service, or a batch software update service. The MBS service may be from a data server, in other words, the data server may provide multicast data. There may be at least one UE that receives the multicast data.

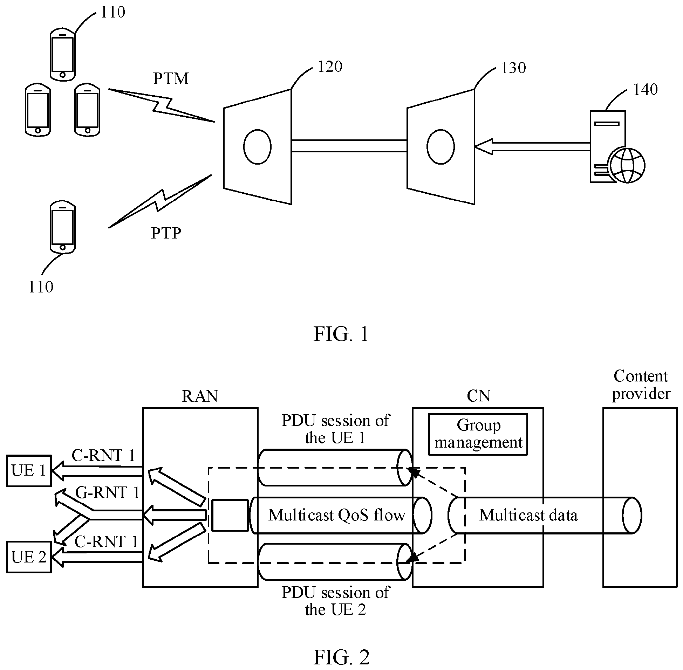

For example, FIG. 1 is a diagram of composition of an MBS service transmission architecture. As shown in FIG. 1, the MBS service transmission architecture may include a UE 110, a base station 120, a core network device 130, and a data server 140.

The data server 140 may send multicast service data (or referred to as MBS data, or referred to as multicast data for short) to the core network device 130. The core network device 130 may send the received MBS data to the base station 120. The base station 120 may send the MBS data to at least one UE 110 that receives an MBS service.

When sending the MBS data to the base station 120, the core network device 130 may transmit the MBS data through a common transmission tunnel MBS session, and each MBS session may include at least one MBS quality of service (quality of service, QoS) flow.

When the base station 120 sends the MBS data to the UE 110, the MBS data may be transmitted over an MBS radio bearer (radio bearer). The MBS radio bearer may also be referred to as an MRB for short. There may be two transmission modes for an MBS radio bearer: a point to multi-point (point to multi-point, PTM) transmission mode, and a point to point (point to point, PTP) transmission mode.

For example, multicast data (multi-cast data) is sent to a UE 1 and a UE 2. FIG. 2 is a diagram of multicast data transmission. As shown in FIG. 2, a multicast data provider (namely, a content provider shown in the figure, for example, the foregoing data server 140) may transmit the multicast data to a core network (core network, CN). The core network may perform group management, for example, maintain a multicast group to which the UE 1 and the UE 1 belong. The core network may manage joining and exiting of the UE. The core network and a radio access network (radio access network, RAN) may establish a related multicast session through protocol data unit (protocol data unit, PDU) session (session)-related signaling, and may also transmit information about MBS session joining and exiting of the UE. The RAN may include a base station. For example, a PDU session is a PDU session for the UE 1 (PDU session for UE 1) and a PDU session for the UE 2 (PDU session for UE 2). In other words, for multicast data transmission between the core network and the base station, a new multicast QoS flow (MBS QoS flow) may be introduced depend on the PDU session.

The RAN may support sending of multicast data to the UE 1 or the UE 2 in PTP and PTM transmission modes, and support dynamic switching that is between the PTP and PTM transmission modes and that is controlled by the RAN. For example, the RAN may separately send data to the UE 1 and the UE 2 in the PTP mode based on a cell radio network temporary identifier (cell radio network temporary identifier, C-RNTI), or may send multicast data to the UE 1 and the UE 2 in the PTM mode based on a group radio network temporary identifier (group radio network temporary identifier, G-RNTI).

In 5G new radio (new radio, NR), a UE may have three radio resource control (radio resource control, RRC) states, which are sequentially an RRC connected state, an RRC idle (idle) state, and an RRC inactive (inactive) state. The RRC connected state (which may be referred to as a connected state for short in this specification) may also be referred to as an RRC active (active) state or an RRC activated state. The RRC inactive state may also be referred to as an RRC non-activated state (which may be referred to as an inactive state for short in this specification). Compared with the RRC connected state, the RRC idle state and/or the RRC inactive state may be referred to as an RRC non-connected state (which may be referred to as a non-connected state for short in this specification).

After the UE establishes an RRC connection to a network device (for example, a base station), the UE enters the RRC connected state. If the UE does not need to transmit data to the network device in a preset time period of the RRC connected state, the network device may determine that the UE enters the RRC inactive state, and the network device may send an RRC release (RRCRelease with suspend indication) message carrying a suspend indication to the UE. After receiving the RRCRelease with suspend indication message, the UE retains a UE context, and enters the RRC inactive state. When the UE is in the RRC inactive state, the UE may store information about the UE context, and only temporarily disconnects the RRC connection to the network device. When the UE has data to be transmitted, the UE may send an RRC resume request message to the network device, and the network device may send an RRC resume response message to the UE. After receiving the resume response message, the UE may send an RRC resume complete message to the network device, and the UE enters the RRC connected state and resumes using the UE context.

Alternatively, when the UE is in the RRC connected state, the network device may send an RRC release message to the UE, and the UE may release the RRC connection to the network device to enter the RRC idle state. When the UE is in the RRC idle state, the UE may send an RRC establishment request message to the network device, and the network device may establish the RRC connection to the UE based on the RRC establishment request message, so that the UE may enter the RRC connected state.

It may be understood that, compared with entering the RRC connected state from the RRC idle state, a speed at which the UE enters the RRC connected state from the RRC inactive state is faster.

The UE in the RRC inactive state may move in an RNA range, and may resume an RRC connection in a cell of another access network device in the RNA range. The cell in which the UE resumes the RRC connection is usually referred to as a new cell or a target cell.

Currently, in a multicast data transmission scenario, a UE may receive multicast data in an RRC connected state, in other words, a multicast service can be provided only for the UE in the RRC connected state, and a base station and a core network need to maintain UE information corresponding to a multicast group. In addition, for the multicast service, multicast session deactivation/activation triggered by the core network is also supported, and the UE is unaware of a status of the service.

However, when a quantity of multicast users (namely, a quantity of UEs) in a cell is excessively large, it may exceed a quantity of connected-state UEs in that can be accommodated in the cell. For example, in some user-dense scenarios, such as concerts, stadiums, and other public safety scenarios, a case in which a quantity of multicast users (namely, a quantity of UEs) in a cell is excessively large, and may exceed a quantity of connected-state UEs that can be accommodated in the cell may occur. As a result, network congestion occurs and user service experience is affected.

To alleviate network congestion, a base station may be enabled to support a UE that joins a multicast session in receiving a multicast service in a non-connected state (for example, an inactive state). The UE in the non-connected state may receive the multicast session in a PTM mode based on a multicast configuration (or referred to as a multicast PTM configuration) provided by a network device (for example, the base station). For a multicast session, a multicast PTM configuration used for receiving a multicast service by a UE in a non-connected state may include one or more of the following: an identifier (for example, a TMGI) of the multicast session, a multicast MRB configuration, a G-RNTI for descrambling a multicast and broadcast traffic channel (MBS traffic channel, MTCH), multicast MTCH scheduling information, and the like.

The multicast MRB configuration may include a packet data convergence protocol (packet data convergence protocol, PDCP) configuration, a radio link control (radio link control, RLC) configuration, and the like of a multicast MRB.

The PCDP configuration includes a configuration of an PDCP entity and a configuration of a PDCP parameter. The PDCP entity may be responsible for data compression and decompression, and security protection. The PDCP parameter may include a length of a PDCP sequence number (sequence number, SN), a size of a PDCP PDU, a PDCP retransmission timer, and the like.

The RLC configuration includes a configuration of an RLC entity and a configuration of an RLC parameter. The RLC entity is responsible for data segmentation and reassembly, and data transmission control. The RLC parameter includes an RLC mode, a length of an RLC SN, a size of an RLC PDU, an RLC retransmission timer, and the like.

A network side may determine PDCP and RLC configuration parameters based on a network requirement and a service requirement.

A reason why a UE is released to a non-connected state may be service deactivation, or may be that the UE is released to the non-connected state to receive a multicast service due to network congestion described above. When a UE accesses a new cell from an old cell, and a base station (which may be referred to as a new base station) corresponding to the new cell is different from a base station (which may be referred to as an old base station) corresponding to the old cell, if the UE is released to a non-connected state due to service deactivation, the new base station may not reconfigure an MRB or perform MRB delta configuration. If the UE is released to the non-connected state to receive a multicast service due to network congestion, because MRBs of the old and new cells may be different, or because the UE continues to use the MRB to receive data in the non-connected state, an MRB configuration in the UE may be changed. The new cell cannot determine whether the MRB configuration on a UE side is changed, cannot determine whether the UE can continue to use, in the new cell, the MRB used in the old cell, or cannot determine the MRB configuration stored on the UE side, so that the new base station needs to reconfigure the MRB.

Reconfiguring the MRB may include: sending a PDCP configuration, an RLC configuration, a MAC configuration, and/or a physical layer (physical layer, PHY) configuration of the MRB to the UE; indicating to release the MRB first and then create a new MRB; or indicating to re-establish a PDCP entity of the MRB, or reset a PDCP entity, an RLC entity, a MAC entity, and/or a physical layer entity for the UE.

For example, in an implementation, the MRB is reconfigured in a full/complete configuration (full config) manner. For example, a PDCP configuration, an RLC configuration, a MAC configuration, and a PHY configuration may be sent to the UE, where each configuration is full configuration information.

In another implementation, the MRB may be reconfigured in a manner of deleting the MRB first and then establishing an MRB. The UE is indicated to delete original MRB configuration information, and new PDCP, RLC, MAC, and PHY configurations are sent to the UE. Each configuration is full configuration information.

In still another implementation, the MRB may alternatively be reconfigured in a PDCP re-establishment manner. For example, the UE may be indicated to re-establish a PDCP entity and perform PDCP configuration. In this manner, the RLC configuration, the MAC configuration, and the PHY configuration may be reconfigured, or may not be reconfigured. This is not limited herein.

Not reconfiguring the MRB may include: not sending a PDCP configuration, an RLC configuration, a MAC configuration, and/or a physical layer (physical layer, PHY) configuration of the MRB to the UE, or performing MRB delta configuration for the UE; not indicating to release the MRB first and then create a new MRB; not indicating to re-establish a PDCP entity of the MRB; or not resetting a PDCP entity, an RLC entity, a MAC entity, and/or a physical layer entity for the UE.

For example, the UE may not be indicated to delete original MRB configuration information, and new PDCP, RLC, MAC, and PHY configurations are not sent to the UE; or the UE may not be indicated to re-establish the PDCP entity. When the UE is not indicated to re-establish the PDCP entity, the RLC configuration, the MAC configuration, and the PHY configuration may be reconfigured or may not be reconfigured. This is not limited herein.

However, the new base station cannot distinguish why the UE is released to the non-connected state, and cannot determine whether to reconfigure the MRB for the UE.

For example, after a UE joins a multicast session in a cell, the UE may move, and may need to perform cell reselection or handover. A current cell connected to the UE may be referred to as an old cell, a source cell, or a previous camped cell, and a cell reselected by the UE may be referred to as a new cell, a target cell, or a new camped cell. A base station corresponding to the old cell may be referred to as an old base station or a source base station, and a base station corresponding to the new cell may be referred to as a new base station or a target base station. When the UE is released to a non-connected state in the old cell, and the new base station is different from the old base station, the new base station cannot distinguish a reason why the UE is released to the non-connected state, and cannot determine whether to reconfigure an MRB for the UE.

In addition, currently, in a scenario in which the new base station does not support sending of a multicast service to the UE in the non-connected state, for example, the new base station is an R17 base station, after receiving access of the UE that receives the multicast service in the non-connected state, the new base station does not reconfigure the MRB (for example, does not modify a PDCP part in an MRB configuration, refer to the foregoing descriptions). Once a previous cell (cell) of the UE is an asynchronous cell, a hyper frame number (hyper frame number, HFN) part in a PDCP window variable of the UE is reset, for example, reset to 0. After the UE at the new base station enters a connected state, if the PDCP window variable is not reset again, a count value inconsistent with a count (count) value on a network side may be determined based on re-received MRB data, in other words, an asynchronous count value may be generated. The UE may discard a data packet or incorrectly deliver a data packet based on the inconsistent count value, causing data disorder and affecting an effect of receiving a service by the UE. In addition, MRB configuration information in a context obtained by the new base station based on a UE context transfer procedure is still configured by the network for the UE when the UE is still at the old base station. If the new base station performs delta (delta) configuration based on the configuration, all MRB configurations of the UE cause problems, and generate inconsistent understanding with the UE.

Therefore, embodiments of this application provide a communication method, which may be applied to a communication system. The communication system may include a first network device, a terminal device, and a second network device. The method may include: The first network device sends a radio resource control release message to the terminal device that joins a multicast session, where the radio resource control release message indicates the terminal device to be released to a non-connected state; and the first network device sends indication information to the second network device, where the indication information indicates whether a multicast and broadcast radio bearer needs to be reconfigured for the terminal device. The second network device may receive the indication information from the first network device. When the indication information indicates that the multicast and broadcast radio bearer needs to be reconfigured for the terminal device, the second network device may send a reconfigured multicast and broadcast radio bearer to the terminal device.

According to the method, the first network device can indicate, to the second network device, whether the multicast and broadcast radio bearer needs to be reconfigured for the terminal device that is released to the non-connected state. The second network device may determine, as indicated by the first network device, whether to reconfigure the multicast and broadcast radio bearer for the terminal device that is released to the non-connected state.

The following describes the communication method provided in embodiments of this application by way of example with reference to the accompanying drawings.

It should be noted that, in descriptions of this application, words such as "first" and "second" are merely used for differentiated description, and are not used for specially limiting a feature. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally represents an "or" relationship between the associated objects. In this application, "at least one" means one or more, and "a plurality of" means two or more. In embodiments of this application, only fewer steps than all steps may be performed, or more steps may be performed. This is not limited.

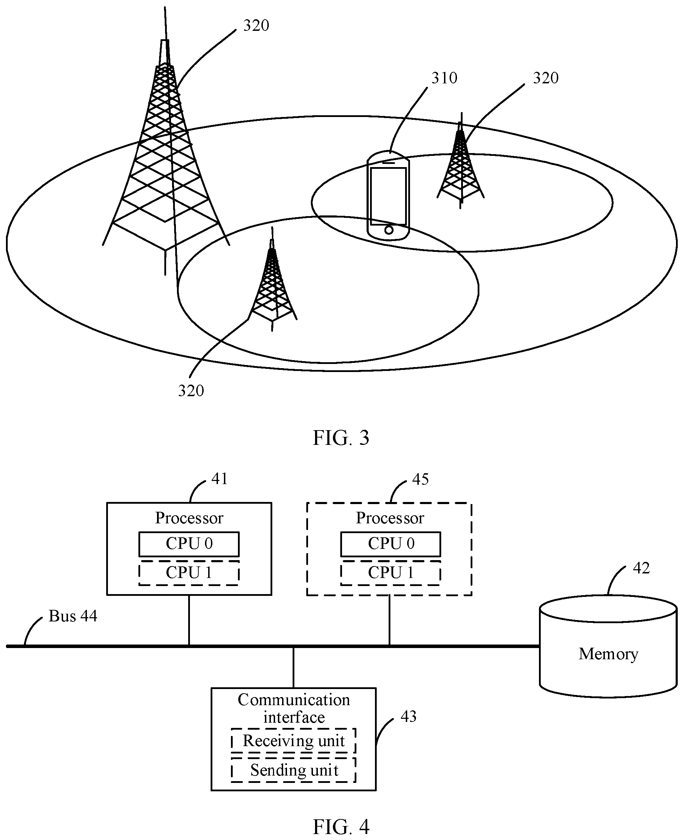

For example, FIG. 3 is a diagram of composition of a communication system according to an embodiment of this application. As shown in FIG. 3, the communication system may include at least one terminal device 310 and at least two network devices 320.

The network device 320 may also be referred to as a radio access network device or a next generation radio access network device, for example, a base station. The terminal device 310 may communicate with the network device 320. The network device 320 may provide the terminal device with function services such as radio resource management, quality of service management, and data encryption and compression. Different network devices 320 may communicate with each other through an Xn interface. Different terminal devices 310 may exchange information and communicate with each other through the network device 320.

The terminal device 310 is located in coverage areas of one or more cells (carriers) provided by the network device 320. In other words, there may be one or more cells serving the terminal device 310. When there are a plurality of serving cells of the terminal device 310, the terminal device 310 may work in a CA transmission mode, a dual connectivity (dual connectivity, DC) transmission mode, or a coordinated multi-point transmission mode.

In the communication system, the terminal device 310 may receive a multicast service in a cell corresponding to a specific network device 320, for example, a first network device. The first network device may further release the terminal device 310 to a non-connected state to receive the multicast service, or release the terminal device 310 to the non-connected state due to service deactivation. The terminal device 310 may perform cell reselection or handover, and reselect to another network device 320, for example, a cell corresponding to a second network device. The terminal device 310 (UE) described in this specification is released to the non-connected state to receive the multicast service, and the non-connected state may be an inactive state.

In this embodiment of this application, an example in which the network device 320 is a base station is used. The first network device may be referred to as a source base station (anchor base station), an old (old) base station, an aged base station, a release base station, a base station that releases a connected state of the UE, a base station that last serves the UE, a base station that is last used for the UE, or the like. The second network device may be referred to as a target base station, a new (new) base station, a newly accessed base station, a new serving base station of the UE, a newly used base station for the UE, or the like. Specific names of the network devices 320 respectively corresponding to the terminal device before and after the cell reselection are not limited in this application.

Optionally, the communication system may be a wideband code division multiple access (wideband code division multiple access, WCDMA) system, a long term evolution (long term evolution, LTE) system, a long term evolution advanced LTE-A (LTE-advanced) system, an LTE frequency division duplex (frequency division duplex, FDD) system, a universal mobile telecommunications system (universal mobile telecommunications system, UMTS), a 5G NR system, another wireless communication system that uses an OFDM technology, or the like. A specific type of the communication system is not limited in this application.

For example, when the communication system is a 5G NR system, the communication system may further include a core network device, and the core network device and the network device 320 may communicate with each other through a next generation (next generation, NG) interface.

Optionally, the terminal device 310 in the communication system may also be referred to as a user equipment (user equipment, UE), a mobile station (mobile station, MS), a mobile terminal (mobile terminal, MT), or the like. The terminal device 310 may be a device that provides voice and/or data connectivity for users, for example, may be a mobile phone (a "cellular" phone), a cell phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set-top box (set-top box, STB), a customer premises equipment (customer premises equipment, CPE), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or another device used for communication in a wireless system, for example, another MTC terminal in an IoT. A specific representation form of the terminal device 310 is not limited in this application either.

The network device 320 may be an access network device of the communication system, for example, a base station. Optionally, in this embodiment of this application, the network device 320 may include a macro base station, a micro base station (also referred to as a small cell), or the like in various forms. For example, the network device may include a base station in WCDMA or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

It may be understood that the foregoing communication system is merely intended to describe the technical solutions in embodiments of this application more clearly, and does not constitute a limitation on the technical solutions provided in embodiments of this application. For example, the communication system may further include another device, for example, a network control device. The network control device may be an operations, administration, and maintenance (operations, administration, and maintenance, OAM) system, which is also referred to as a network management system. The network control device may manage the foregoing network device.

Corresponding to the communication system, the network device 320 in this embodiment of this application may be a base station system according to a 4th generation mobile information technology (4th generation mobile communication technology, 4G), may be a base station system according to a 5th generation mobile information technology (5th generation mobile communication technology, 5G), may be a base station system according to a 6th generation mobile information technology (6th generation mobile communication technology, 6G), or may even applicable to a base station system or a fronthaul network usable in a future communication network. This is not specifically limited.

For example, FIG. 4 is a diagram of composition of a network device according to an embodiment of this application. The network device may be the foregoing first network device or second network device. As shown in FIG. 4, the network device may include at least one processor 41, a memory 42, a communication interface 43, and a bus 44.

The processor 41 is a control center of the network device, and may be one processor or may be a general term of a plurality of processing elements. For example, the processor 41 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 41 may run or execute a software program stored in the memory 42, and invoke data stored in the memory 42, to perform various functions of the network device. For example, when the network device is a structure of the first network device, the network device may perform steps performed by the first network device in the communication method provided in embodiments of this application. For another example, when the network device is a structure of the second network device, the network device may perform steps performed by the second network device in the communication method provided in embodiments of this application.

During specific implementation, in an embodiment, the processor 41 may include one or more CPUs, for example, a CPU 0 and a CPU 1 in FIG. 4.

During specific implementation, in an embodiment, the network device may include a plurality of processors, for example, the processor 41 and a processor 45 shown in FIG. 4. Each of the processors may be a single-core processor (single-CPU), or may be a multi-core processor (multi-CPU). The processor herein may be one or more devices, circuits, and/or processing cores configured to process data (for example, computer program instructions).

The memory 42 may store a software program of steps of the method performed by the network device, and the processor 41 controls execution of the software program. The memory 42 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible to a computer. However, this is not limited thereto.

The memory 42 may exist independently, and is connected to the processor 41 through the bus 44. Alternatively, the memory 42 may be integrated with the processor 41. This is not limited herein.

The communication interface 43 is configured to communicate with another device or communication network by using any transceiver-type apparatus. The communication interface 43 may be an Ethernet interface, a radio access network (radio access network, RAN) interface, a wireless local area network (wireless local area network, WLAN) interface, or the like. The communication interface 43 may include a receiving unit for implementing a receiving function, and a sending unit for implementing a sending function.

The bus 44 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus.

Although the bus 44 is used in FIG. 4, it may be understood that the bus may also be replaced with a connection relationship in another form, and is not limited to the bus itself.

Optionally, for a structure of the terminal device in embodiments of this application, refer to the structure of the network device shown in FIG. 4. Details are not described herein again.

The communication method provided in embodiments of this application is applicable to a scenario in which the first network device releases the terminal device to the non-connected state, and the terminal device performs cell reselection or handover to reselect to a cell corresponding to the second network device in the communication system shown in FIG. 3.

It should be understood that, with evolution of the network architecture and emergence of a new service scenario, the technical solutions provided in embodiments of this application are also applicable to similar technical problems.

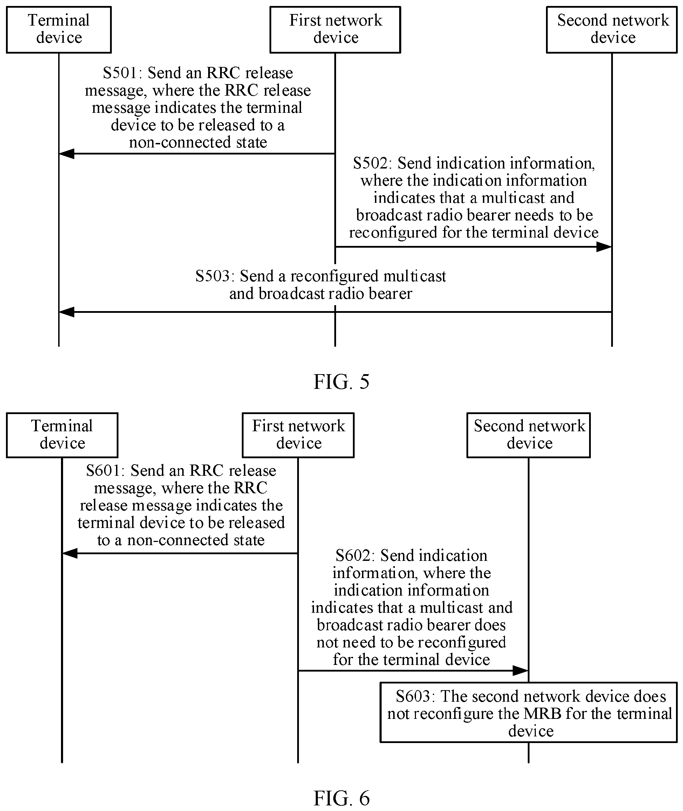

For example, the first network device indicates, to the second network device, that a multicast and broadcast radio bearer needs to be reconfigured for the terminal device. FIG. 5 is a schematic flowchart of a communication method according to an embodiment of this application. As shown in FIG. 5, the communication method may include S501 to S503.

S501: A first network device sends a radio resource control release message to a terminal device that joins a multicast session, where the radio resource control release message indicates the terminal device to be released to a non-connected state.

For example, the terminal device may access a cell corresponding to the first network device, for example, a cell 1, and join a multicast session to receive a multicast service. For example, the terminal device may receive the multicast service in a connected state. For a specific manner in which the terminal device receives the multicast service, refer to the descriptions in the foregoing embodiment.

In some possible scenarios, the first network device may send the radio resource control release message to the terminal device, to indicate the terminal device to be released to the non-connected state to receive the multicast service, for example, in the foregoing described network congestion scenario. The first network device has a capability of supporting sending of the multicast service to the terminal device in the non-connected state.

In some other possible scenarios, the first network device may alternatively send the radio resource control release message to the terminal device due to service deactivation, to indicate the terminal device to be released to the non-connected state. For example, when the multicast session joined by the terminal device has no data temporarily or the multicast session is deactivated, the first network device may send the radio resource control release message to the terminal device, to indicate the terminal device to be released to the non-connected state.

For example, the radio resource control release message (RRC release) message may indicate the terminal device to enter an inactive state to receive the multicast service, or only indicate the terminal device to enter the non-connected state. When the terminal device is indicated to enter the inactive state to receive the multicast service, the RRC release message may be the foregoing RRC release (RRCRelease with suspend indication) message carrying the suspend indication. For example, the RRC release message may include suspend configuration (suspendConfig) information, and the suspendConfig information indicates the terminal device to enter the non-connected state. When the first network device indicates the terminal device to be released to the non-connected state to receive the multicast service, the suspendConfig information further indicates information about the multicast service received by the terminal device that is released to the non-connected state. The terminal device in the non-connected state may receive the multicast service as indicated by the suspendConfig information.

As described above, the terminal device in the non-connected state may receive the multicast session in a PTM mode based on a multicast PTM configuration provided by the network device.

In a possible design, the first network device may send, to the terminal device by using the RRC release message, the multicast PTM configuration used for receiving the multicast session by the terminal device in the non-connected state. For example, the multicast PTM configuration may be included in the suspendConfig information.

In another possible design, the first network device may send, to the UE in a manner similar to that of providing an MBS broadcast configuration, a multicast control channel (MBS control channel, MCCH) message.

For a case in which the MBS broadcast configuration is sent to the terminal device by using the MCCH message, an MCCH configuration manner may be as follows: (1) The RRC release message may further include an MCCH configuration of a cell, for the terminal device to obtain the MCCH message. (2) The MCCH configuration may alternatively be sent by using cell common signaling. This is similar to broadcast. The MCCH configuration is sent in a system message (for example, SIBx), so that the terminal device obtains a multicast MCCH configuration by reading the system message, further reads a multicast MCCH message of the cell, and then obtains the multicast PTM configuration by using the MCCH message.

Optionally, if the terminal device in the connected state has started to receive the multicast session, the first network device may indicate the terminal device to receive the multicast session in the non-connected state by using a multicast PTM configuration for receiving the multicast session in the RRC connected state, or may provide a non-connected state multicast PTM configuration by using the foregoing RRC release message or MCCH message. The non-connected state multicast PTM configuration may be the same as or different from the connected state configuration. In some other possible manners, the terminal device may alternatively continue to use the connected state multicast PTM configuration by default, without requiring an indication from a network side.

The multicast PTM configuration may also be referred to as an MRB configuration, or an MRB configuration including only a PTM part.

After the terminal device is released to the non-connected state, the terminal device may perform cell reselection and/or handover, and reselect to a cell corresponding to a second network device.

After sending the radio resource control release message to the terminal device, the first network device may perform S502, to indicate, to the second network device, that a multicast and broadcast radio bearer needs to be reconfigured for the terminal device.

S502: The first network device sends indication information to the second network device, where the indication information indicates that the multicast and broadcast radio bearer needs to be reconfigured for the terminal device.

Correspondingly, the second network device receives the indication information from the first network device.

For example, the first network device may send a message including the foregoing indication information to the second network device, to indicate the second network device to reconfigure the multicast and broadcast radio bearer (MBS radio bearer, MRB) for the terminal device. For details about the MRB, refer to the descriptions in the foregoing embodiment.

The second network device may perform, as indicated by the indication information, S503 to reconfigure the MRB for the terminal device. It may be understood that after the terminal device accesses the cell corresponding to the second network device, the second network device performs S503.

S503: The second network device sends a reconfigured multicast and broadcast radio bearer to the terminal device.

For example, that the second network device reconfigures the MRB for the terminal device may include: configuring the MRB in a full configuration (full config) manner, deleting the MRB first and then establishing an MRB, or re-establishing an MRB. A specific manner of reconfiguring the MRB may depend on a specific network requirement and a specific service requirement, and is not limited herein.

That the MRB is configured in the full config manner means that the second network device may provide the terminal device with complete configuration information, including parameters such as a frequency and a channel. For example, MRB configuration information may include at least one of parameters of four layers, such as PDCP, RLC, MAC, and PHY. Optionally, the MRB configuration information may be carried by using a message like an RRC reconfiguration message or an RRC resume complete message.

That the MRB is deleted first and then the MRB is established means that an original multicast and broadcast radio bearer is first deleted, and then a new bearer is re-established. Optionally, the MRB is deleted first and then the MRB is established by using one message, for example, one RRC reconfiguration message, two RRC reconfiguration messages, or one RRC resume complete message and one reconfiguration message. This is not limited in this application.

That the MRB is re-established means that the reconfiguration is performed on an existing multicast and broadcast radio bearer, including changing at least one of parameters such as PDCP, RLC, MAC, and PHY. For example, the UE may be indicated to re-establish a PDCP entity and perform PDCP configuration.

For a specific implementation of reconfiguring the MRB, also refer to the descriptions in the foregoing embodiment.

Correspondingly, the terminal device receives the reconfigured multicast and broadcast radio bearer, and updates the multicast and broadcast radio bearer.

In the embodiment shown in FIG. 5, a case in which the first network device indicates, to the second network device, that the multicast and broadcast radio bearer needs to be reconfigured for the terminal device is described. FIG. 6 is another schematic flowchart of a communication method according to an embodiment of this application. As shown in FIG. 6, when a first network device indicates, to a second network device, that a multicast and broadcast radio bearer does not need to be reconfigured for a terminal device, the communication method may include S601 to S603.

S601: The first network device sends a radio resource control release message to a terminal device that joins a multicast session, where the radio resource control release message indicates the terminal device to be released to a non-connected state.

For S601, refer to the descriptions of S501. Details are not described again.

S602: The first network device sends indication information to the second network device, where the indication information indicates that a multicast and broadcast radio bearer does not need to be reconfigured for the terminal device.

Correspondingly, the second network device receives the indication information from the first network device.

For example, the first network device may send a message including the indication information to the second network device, to indicate that the second network device does not need to reconfigure the MRB for the terminal device.

The second network device may not perform, as indicated by the indication information, an operation of reconfiguring the MRB for the terminal device.

S603: The second network device does not reconfigure the MRB for the terminal device.

It may be understood that during actual implementation, there is no actual step of S603, and the second network device does not perform the operation of reconfiguring the MRB for the terminal device. S603 is used for representation in FIG. 6 merely for better description. In other words, the second network device only does not re-establish a PDCP entity, but still needs to reconfigure another bottom layer, or may perform delta configuration. For example, the second network device may not indicate the UE to re-establish the PDCP entity. RLC, MAC, and PHY configurations may be reconfigured or not reconfigured, or delta configuration may be performed on the UE. This is not limited herein. For implementation logic of not reconfiguring the MRB, refer to the descriptions in the foregoing embodiment.

In this embodiment of this application, the first network device sends the indication information to the second network device, to indicate whether the second network device needs to reconfigure the MRB for the terminal device that joins the multicast session, so that when the terminal device accesses the second network device, the second network device can determine whether to reconfigure the MRB for the terminal device. Therefore, a decision basis for reconfiguring the MRB is provided for the second network device.

Based on the foregoing embodiments, this application actually separately provides a communication method applied to a first network device and a communication method applied to a second network device. In the communication method applied to the first network device, the first network device may send a radio resource control release message to a terminal device that joins a multicast session, where the radio resource control release message indicates the terminal device to be released to a non-connected state; and the first network device may send indication information to the second network device, where the indication information indicates whether a multicast and broadcast radio bearer needs to be reconfigured for the terminal device. In the communication method applied to the second network device, the second network device may receive indication information from the first network device. When the indication information indicates that a multicast and broadcast radio bearer needs to be reconfigured for a terminal device, the second network device may send a reconfigured multicast and broadcast radio bearer to the terminal device. When the indication information indicates that the multicast and broadcast radio bearer does not need to be reconfigured for the terminal device, the second network device may not reconfigure the multicast and broadcast radio bearer for the terminal device.

In a possible design, the indication information specifically indicates whether the multicast and broadcast radio bearer needs to be reconfigured for the terminal device or the multicast and broadcast radio bearer does not need to be reconfigured for the terminal device. This may be determined based on a reason why the terminal device is released to the non-connected state.

For example, when the terminal device is released to the non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

For example, the first network device may know whether the terminal device is released to the non-connected state because the terminal device is released to the non-connected state to receive the multicast service, or the multicast session joined by the terminal device has no data temporarily or the multicast session is deactivated. The first network device may indicate, to the second network device based on the reason why the terminal device is released to the non-connected state, whether the multicast and broadcast radio bearer needs to be reconfigured for the terminal device.

In this design, for a scenario in which the terminal device is released to the non-connected state to receive the multicast service and access the second network device, the second network device may reconfigure the multicast and broadcast radio bearer for the terminal device. In a scenario in which the terminal device accesses the second network device after the terminal device is released to the non-connected state because the multicast session joined by the terminal device has no data temporarily or the multicast session is deactivated, the second network device may not reconfigure the multicast and broadcast radio bearer for the terminal device, so that some signaling overheads are reduced.

In a case in which the second network device is a network device that does not support sending of the multicast service to a UE in the non-connected state, for example, the second network device is an R17 base station, after the second network device receives access of the UE that receives the multicast service in the non-connected state, the second network device may still reconfigure the MRB, for example, may modify a PDCP part in a MRB configuration, to reduce occurrences of MRB data disorder and MRB configuration problems. Optionally, the second network device and the first network device that supports sending of the multicast service to the UE in the non-connected state may be synchronized or may not be synchronized.

Optionally, in some embodiments, the terminal device may be released to the non-connected state to receive the multicast service, and the multicast session joined by the terminal device has no data temporarily or the multicast session is deactivated. For this case, the first network device may treat the terminal device as being released to the non-connected state to receive the multicast service, and send the indication information to the second network device, to indicate that the second network device needs to reconfigure the multicast and broadcast radio bearer for the terminal device.

In a possible design, the indication information may specifically indicate whether the terminal device is released to the non-connected state to receive the multicast service.

For example, the indication information may indicate whether the terminal device is released to the non-connected state to receive the multicast service. After receiving the indication information, the second network device may determine, based on an indication result of the indication information, whether the multicast and broadcast radio bearer needs to be reconfigured for the terminal device. For example, when the indication information indicates that the terminal device is released to the non-connected state to receive the multicast service, the second network device may reconfigure the multicast and broadcast radio bearer for the terminal device. Alternatively, when the indication information indicates that the terminal device is released to the non-connected state and does not receive the multicast service (to be specific, the terminal device is released to the non-connected state but does not receive the multicast service in the non-connected state), the second network device may not reconfigure the multicast and broadcast radio bearer for the terminal device.

For example, in this design, the indication information may be a 1-bit (bit) field, for example, an enumerated value "true", which can indicate whether the terminal device is released to the non-connected state to receive the multicast service. An implementation (for example, a type or a size of a field) of the indication information is not limited in this application.

In this design, the indication information indicates whether the terminal device is released to the non-connected state to receive the multicast service, so that the second network device can be indicated, by using small signaling overheads, whether the multicast and broadcast radio bearer needs to be reconfigured for the terminal device. When reconfiguring the multicast and broadcast radio bearer for the terminal device, the second network device may reconfigure the MRB for all multicast services received by the terminal device.

When the indication information indicates that the terminal device is released to the non-connected state to receive the multicast service, the step of sending, by the second network device, the reconfigured multicast and broadcast radio bearer to the terminal device may include: sending, to the terminal device, the multicast and broadcast radio bearer reconfigured for all the multicast services of the terminal device.

In another possible design, the indication information may specifically indicate information about the multicast service received by the terminal device that is released to the non-connected state.

For example, the indication information may indicate whether the terminal device is released to the non-connected state and specific multicast services that are received, namely, the information about the received multicast service. After receiving the indication information, the second network device may determine, based on the information about the multicast service received by the terminal device that is released to the non-connected state, whether the multicast and broadcast radio bearer needs to be reconfigured for the terminal device. For example, when the information about the multicast service received by the terminal device that is released to the non-connected state is empty, the second network device may not reconfigure the multicast and broadcast radio bearer for the terminal device. When the information about the multicast service received by the terminal device that is released to the non-connected state is not empty, for example, includes a target multicast service, the second network device may reconfigure the multicast and broadcast radio bearer for the target multicast service.

Optionally, in this design, the indication information may be a temporary multicast group identifier (temporary multicast group identifier, TMGI) list (list). The TMGI list may indicate specific multicast services to be received by a UE that is released to an inactive state, so that it can clearly specify, to the second network device, the specific multicast services that need to be reconfigured. The second network device may reconfigure the multicast and broadcast radio bearer for the multicast service received by the terminal device that is released to the connected state.

When the indication information indicates the information about the multicast service received by the terminal device that is released to the non-connected state, the step of sending, by the second network device, the reconfigured multicast and broadcast radio bearer to the terminal device may include: sending, to the terminal device, the multicast and broadcast radio bearer reconfigured for the multicast service received by the terminal device that is released to the connected state.

In this design, the indication information indicates the information about the multicast service received by the terminal device that is released to the non-connected state, so that the second network device can be indicated to accurately reconfigure the multicast and broadcast radio bearer for the multicast service received by the terminal device that is released to the connected state.

In still another possible design, the indication information may specifically indicate MRB information used for receiving the multicast service by the terminal device that is released to the non-connected state.

For example, the indication information may indicate specific MRB information (for example, an MRB identifier) used for receiving the multicast service by the terminal device that is or that is not released to the non-connected state. After receiving the indication information, the second network device may determine, based on the MRB information used for receiving the multicast service by the terminal device that is released to the non-connected state, whether the multicast and broadcast radio bearer needs to be reconfigured for the terminal device. For example, when the MRB information used for receiving the multicast service by the terminal device that is released to the non-connected state is empty, the second network device may not reconfigure the multicast and broadcast radio bearer for the terminal device. When the MRB information used for receiving the multicast service by the terminal device that is released to the non-connected state is not empty, for example, includes a target MRB, the second network device may reconfigure the multicast and broadcast radio bearer for the target MRB.

In this design, the indication information indicates the MRB information used for receiving the multicast service by the terminal device that is released to the non-connected state, so that the second network device can be indicated to more accurately reconfigure the MRB used for receiving the multicast service by the terminal device that is released to the connected state.

In still another possible design, the indication information may include suspension configuration information, where the suspension configuration information indicates information about the multicast service received by the terminal device that is released to the non-connected state.

For example, refer to the descriptions in the foregoing embodiment, the RRC release message may include the suspend configuration (suspendConfig) information, and the suspendConfig information indicates the terminal device to enter the non-connected state. When the first network device indicates the terminal device to be released to the non-connected state to receive the multicast service, the suspendConfig information further indicates the information about the multicast service received by the terminal device that is released to the non-connected state. The terminal device in the non-connected state may receive the multicast service as indicated by the suspendConfig information.

When the indication information includes the suspension configuration information, the suspension configuration information may indicate, to the second network device, the information about the multicast service received by the terminal device that is released to the non-connected state. The second network device may reconfigure the multicast and broadcast radio bearer for the multicast service received by the terminal device that is released to the connected state.

When the indication information includes the suspension configuration information, the step of sending, by the second network device, the reconfigured multicast and broadcast radio bearer to the terminal device may include: sending, to the terminal device, the multicast and broadcast radio bearer reconfigured for the multicast service received by the terminal device that is released to the connected state.

For example, the suspendConfig information may further include MRB information used for receiving the multicast service by the terminal device that is released to the non-connected state. When the indication information includes the suspendConfig information, and the suspendConfig information includes the MRB information used for receiving the multicast service by the terminal device that is released to the non-connected state, after receiving the indication information, the second network device may reconfigure, based on the MRB information used for receiving the multicast service by the terminal device that is released to the non-connected state, the MRB used for receiving the multicast service by the terminal device that is released to the non-connected state.

In this design, the suspension configuration information may indicate the information about the multicast service received by the terminal device that is released to the non-connected state, and/or indicate the MRB information used for receiving the multicast service by the terminal device that is released to the non-connected state, so that the second network device can also be indicated to accurately reconfigure the multicast and broadcast radio bearer for the multicast service received by the terminal device that is released to the connected state.

In still another possible design, the indication information may also include a radio resource control connection release (RRC release) message, and the RRC release message includes suspension configuration information.

In this design, the first network device may alternatively use the RRC release message as the indication information, and indicate, to the second network device by using the suspension configuration information in the RRC release message, information about the multicast service received by the terminal device that is released to the non-connected state. The RRC release message is used as the indication information, so that the second network device can also be accurately indicated to reconfigure the multicast and broadcast radio bearer for the multicast service received by the terminal device that is released to the connected state.

In some other possible designs, implementations of the indication information may alternatively include any one or more of the foregoing designs. In other words, the indication information may be implemented in at least one of the following implementations: indicating whether the terminal device is released to the non-connected state to receive the multicast service, indicating the information about the multicast service received by the terminal device that is released to the non-connected state, including the suspension configuration information, and including the radio resource control connection release message.

For example, the indication information may include a 1-bit indication field (refer to the foregoing descriptions), a TMGI list, suspendConfig information, and an RRC release message.

An implementation of the indication information is not limited in this application.

In a possible design, the first network device may further determine, based on capability information of the second network device, whether to send the indication information to the second network device. The capability information includes whether sending of the multicast service to the terminal device in the non-connected state is supported. When the second network device supports sending of the multicast service to the terminal device in the non-connected state, the first network device may send the indication information to the second network device; or when the second network device does not support sending of the multicast service to the terminal device in the non-connected state, the first network device may not send the indication information to the second network device.

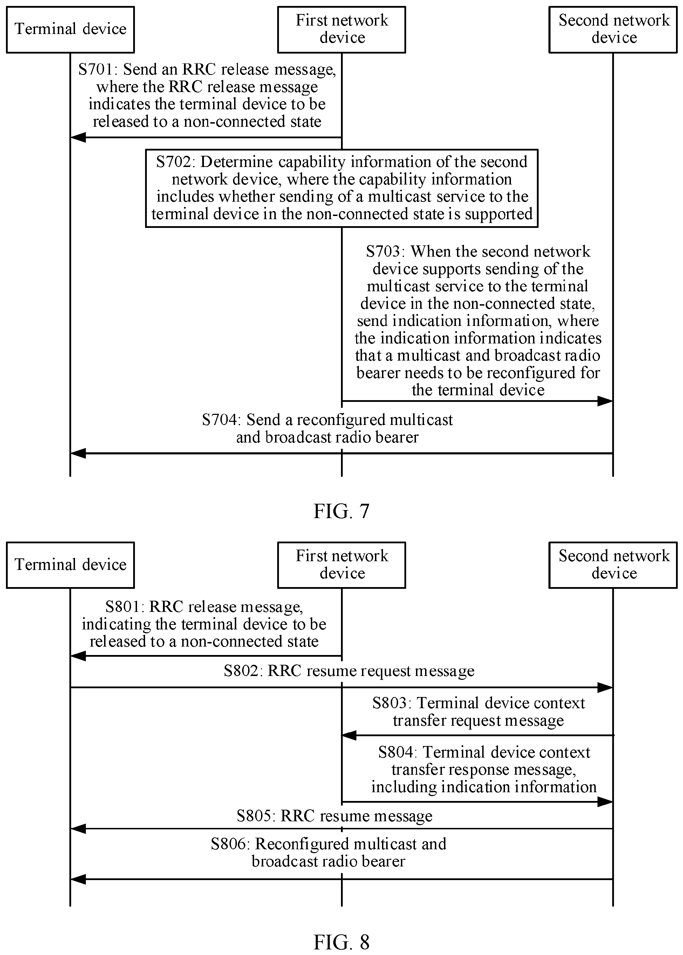

For example, the indication information indicates that the multicast and broadcast radio bearer needs to be reconfigured for the terminal device. FIG. 7 is still another schematic flowchart of a communication method according to an embodiment of this application. As shown in FIG. 7, the communication method may include S701 to S704.

S701: A first network device sends a radio resource control release message to a terminal device that joins a multicast session, where the radio resource control release message indicates the terminal device to be released to a non-connected state.

For S701, refer to the descriptions of S501. Details are not described again.

S702: The first network device determines capability information of a second network device, where the capability information includes whether sending of a multicast service to the terminal device in the non-connected state is supported.

When the second network device supports sending of the multicast service to the terminal device in the non-connected state, S703 is performed. When the second network device does not support sending of the multicast service to the terminal device in the non-connected state, a subsequent step is not performed.

S703: When the second network device supports sending of the multicast service to the terminal device in the non-connected state, the first network device sends indication information to the second network device, where the indication information indicates that a multicast and broadcast radio bearer needs to be reconfigured for the terminal device.

Correspondingly, the second network device receives the indication information from the first network device.

S704: The second network device sends a reconfigured multicast and broadcast radio bearer to the terminal device.

For S703 and S704, refer to the descriptions of S502 and S503. Details are not described again.

It may be understood that a case in which the indication information indicates that the multicast and broadcast radio bearer does not need to be reconfigured for the terminal device is similar to that in FIG. 7. Details are not described again.

In this design, the first network device may send the indication information to only the second network device that supports sending of the multicast service to the terminal device in the non-connected state, to indicate whether the second network device needs to reconfigure the multicast and broadcast radio bearer for the terminal device. The indication information may not need to be sent to the second network device that does not support sending of the multicast service to the terminal device in the non-connected state, so that a waste of signaling can be reduced. In other words, in this design, the second network device may support sending of the multicast service to the terminal device in the non-connected state. For example, the second network device may be an R18 base station.

In a possible design, when an Xn interface with the second network device is established or modified, the first network device may determine the capability information of the second network device.

For example, the Xn interface is an interface used in a 5G network for connecting different network devices (for example, gNBs), and is configured to support transmission on a control plane and a user plane. When the Xn interface with the second network device is established or modified, the first network device may obtain the capability information of the second network device.

For example, when the Xn interface with the first network device is established or modified, the second network device may send the capability information of the second network device to the first network device.

In this design, when the Xn interface with the second network device is established or modified, the first network device determines the capability information of the second network device, so that the capability information of the second network device may be learned of by using a control plane message or a user plane message of the Xn interface, to reduce signaling overheads.

In another possible design, the first network device may determine the capability information of the second network device based on a terminal device context transfer request message from the second network device.

For example, the second network device may send the terminal device context transfer request message to the first network device, and the terminal device context transfer request message may include the capability information of the second network device.

For example, a UE that reselects to a cell corresponding to the second network device is a target UE. The terminal device context transfer request message may be a UE context transfer request message of the target UE, or may be a UE context transfer request message of any one or more other UEs that perform cell handover or reselection before the target UE reselects to the cell corresponding to the second network device. For example, when a 1^{st} UE performs cell handover or reselection between the first network device and the second network device, the second network device may send the capability information of the second network device to the first network device by using a UE context transfer request message of the 1^{st} UE.

Alternatively, before the target UE reselects to the cell corresponding to the second network device, when another UE is handed over or reselects to a cell corresponding to the first network device from the cell corresponding to the second network device, the second network device may send the capability information of the second network device to the first network device by using a UE context transfer response message of the another UE.

In this design, the first network device determines the capability information of the second network device based on the terminal device context transfer request message from the second network device, so that the capability information of the second network device may be learned of by using the terminal device context transfer request message, and signaling overheads may also be reduced.

In still another possible design, the first network device may determine the capability information of the second network device based on the operations, administration, and maintenance configuration information.

For example, the operations, administration, and maintenance (operations, administration, and maintenance, OAM) configuration information may include the capability information of the second network device. The first network device may learn, based on the OAM configuration information, whether the second network device supports sending of the multicast service to the terminal device in the non-connected state.

In this design, the capability information of the second network device is synchronized to the first network device by using the OAM configuration information, and no other message needs to be used, so that signaling overheads can also be reduced.

Optionally, the first network device may determine the capability information of the second network device in one or more of the foregoing implementations, or may obtain the capability information of the second network device by using another message. A manner of determining the capability information is not limited in this application.

In a possible design, the first network device may send the indication information to the second network device by using a terminal device context transfer response message corresponding to the terminal device. For example, the step of sending, by the first network device, the indication information to the second network device may include: The first network device sends, to the second network device, the terminal device context transfer response message corresponding to the terminal device, where the terminal device context transfer response message includes the indication information.

For example, FIG. 8 is still another schematic flowchart of a communication method according to an embodiment of this application. As shown in FIG. 8, the communication method may include S801 to S806.

S801: A first network device sends an RRC release message to a terminal device that joins a multicast session, where the RRC release message indicates the terminal device to be released to a non-connected state.

Correspondingly, the terminal device receives the RRC release message.

For example, that the first network device releases the UE to the non-connected state may include: releasing the UE to the non-connected state to receive a multicast service, or releasing the UE to the non-connected state because there is no data temporarily or the multicast service session is deactivated. For details, refer to the descriptions in the foregoing embodiment. Details are not described again. When the UE is released to the non-connected state to receive the multicast service, the UE may continue to receive the multicast service in the non-connected state.

S802: The terminal device sends an RRC resume request message to a second network device.

Correspondingly, the second network device receives the RRC resume request message.

For example, the terminal device may initiate access in a cell corresponding to the second network device. The terminal device may send the RRC resume request (RRCResumeRequest) message to the second network device to trigger RRC resume. For example, the terminal device that receives the multicast service in the non-connected state may initiate access when the cell corresponding to the second network device has no corresponding multicast PTM configuration, or the terminal device in the non-connected state initiates access in response to a paging (paging) message.

S803: The second network device sends a terminal device context transfer request message to the first network device.

Correspondingly, the first network device receives the terminal device context transfer request message.

For example, when the second network device is different from the first network device, after receiving the RRCResumeRequest message of the terminal device, the second network device may send the terminal device context transfer request (RETRIEVE UE CONTEXT REQUEST) message to the first network device.

S804: The first network device sends a terminal device context transfer response message to the second network device, where the terminal device context transfer response message includes indication information.

Correspondingly, the second network device receives the terminal device context transfer response message.

For example, the terminal device context transfer response (RETRIEVE UE CONTEXT RESPONSE) message may include context information of the terminal device. In this design, the terminal device context transfer response message may further include the foregoing indication information. For the indication information, refer to the descriptions in the foregoing embodiment, and the indication information indicates whether a multicast and broadcast radio bearer needs to be reconfigured for the terminal device.

In some examples, for a UE that receives multicast, the RETRIEVE UE CONTEXT RESPONSE message may include a UE Context Information-Retrieve UE Context Response information element. The UE Context Information-Retrieve UE Context Response information element may contain handover preparation information (HandoverPreparationInformation). An RRCRelease message or suspendConfig that is used when the UE is released may be introduced into the HandoverPreparationInformation as indication information to indicate to the second network device that the UE is released to an inactive state to receive the multicast service.

S805: The second network device sends an RRC resume message to the terminal device.

Correspondingly, the terminal device receives the RRC resume message.

For example, after the terminal device completes the access, the second network device may send the RRC resume (RRCResume) message to the terminal device, to indicate that the terminal device has accessed. After the access of the terminal device, the second network device may perform S806 to reconfigure the MRB for the terminal device.

S806: The second network device sends a reconfigured multicast and broadcast radio bearer to the terminal device.

Correspondingly, the terminal device receives the reconfigured multicast and broadcast radio bearer.

For S806, refer to the descriptions of S503. Details are not described again. It may be understood that when the indication information indicates that the MRB does not need to be reconfigured, S806 is not performed.

In this design, the first network device sends the indication information to the second network device by using the terminal device context transfer response message, to indicate whether the MRB needs to be reconfigured for the terminal device. The indication information may be sent by using an existing message, so that signaling overheads can be reduced, and implementation costs can be reduced.

In another possible design, the first network device may alternatively send the indication information to at least one network device in a wireless coverage area of the first network device, where the at least one network device includes the second network device.

For example, the first network device may send the indication information to all network devices in the wireless coverage area. When the terminal device accesses a specific network device thereof, the network device is the second network device.

In this design, a sending occasion of the indication information may not be limited. When communicating with a network device in the wireless coverage area, the first network device may send the indication information to the network device through an Xn interface or in another manner, so that sending of the indication information can be more flexible.

In still another possible design, the first network device may send the indication information to the second network device by using a paging message. The second network device may receive the paging message sent by the first network device, where the paging message includes the indication information.

In this design, the indication information may alternatively be sent by using the paging message between the network devices. For example, the indication information may be added to a location that is in the paging message and that is parallel to a paging identifier of the UE. Sending the indication information by using the paging message can also reduce signaling overheads, reduce implementation costs, and implement more flexible sending of the indication information.

It should be noted that, in some other possible designs, the indication information may alternatively be sent by using another message. A manner of sending the indication information is not limited in this application.

Optionally, in some other embodiments, the first network device may send the indication information to the second network device only when the first network device needs to indicate the second network device to reconfigure the MRB for the terminal device. The indication information may indicate only that the MRB needs to be reconfigured for the terminal device. When the MRB does not need to be reconfigured for the terminal device, the first network device may not send the indication information.

Optionally, in the foregoing embodiment of this application, the first network device may send the indication information (refer to the foregoing descriptions), for example, information such as a 1-bit field, a TMGI list, suspendConfig information, and an RRC release message, to the second network device according to a protocol. However, the first network device may not sense a purpose of the information, to be specific, the first network device may not need to determine whether the information indicates whether the MRB is to be reconfigured. The second network device that receives the information may still determine, based on the information, whether to reconfigure the MRB.

The foregoing embodiments shown in FIG. 5 to FIG. 8 mainly describe a solution in which the first network device sends the indication information to the second network device, to indicate whether the multicast and broadcast radio bearer needs to be reconfigured for the terminal device. Embodiments of this application further provide a communication method. A terminal device may indicate, to a second network device, whether a multicast and broadcast radio bearer needs to be reconfigured for the terminal device. In the method, a terminal device that joins a multicast session may receive a radio resource control release message from a first network device, where the radio resource control release message indicates the terminal device to be released to a non-connected state; and the terminal device may send indication information to the second network device, where the indication information indicates whether a multicast and broadcast radio bearer needs to be reconfigured for the terminal device. The second network device may receive the indication information from the terminal device. When the indication information indicates that the multicast and broadcast radio bearer needs to be reconfigured for the terminal device, the second network device may send a reconfigured multicast and broadcast radio bearer to the terminal device. When the indication information indicates that the multicast and broadcast radio bearer does not need to be reconfigured for the terminal device, the second network device may not reconfigure the multicast and broadcast radio bearer for the terminal device.

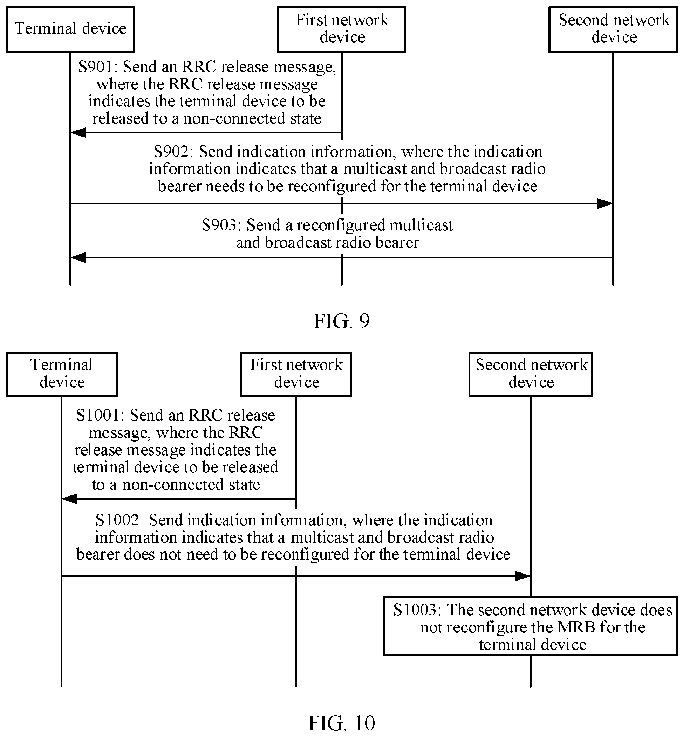

For example, the terminal device indicates, to the second network device, that the multicast and broadcast radio bearer needs to be reconfigured for the terminal device. FIG. 9 is still another schematic flowchart of a communication method according to an embodiment of this application. As shown in FIG. 9, the communication method may include S901 to S903.

S901: A first network device sends a radio resource control release message to a terminal device that joins a multicast session, where the radio resource control release message indicates the terminal device to be released to a non-connected state.

Correspondingly, the terminal device receives the radio resource control release message.

For S901, refer to the descriptions of S501. Details are not described again.

S902: The terminal device sends indication information to the second network device, where the indication information indicates that a multicast and broadcast radio bearer needs to be reconfigured for the terminal device.

Correspondingly, the second network device receives the indication information.

For example, the terminal device may send a message including the indication information to the second network device, to indicate the second network device to reconfigure the MRB for the terminal device.

For example, in this embodiment, the terminal device may indicate, to the second network device, that the multicast and broadcast radio bearer needs to be reconfigured for the terminal device. For an implementation in which the second network device reconfigures the MRB for the terminal device, refer to the descriptions in the foregoing embodiment.

S903: The second network device sends a reconfigured multicast and broadcast radio bearer to the terminal device.

Correspondingly, the terminal device receives the multicast and broadcast radio bearer reconfigured by the second network device for the terminal device.

For S903, refer to the descriptions of S503. Details are not described again.

In the embodiment shown in FIG. 9, a case in which the terminal device indicates, to the second network device, that the multicast and broadcast radio bearer needs to be reconfigured for the terminal device is described. FIG. 10 is still another schematic flowchart of a communication method according to an embodiment of this application. As shown in FIG. 10, when a terminal device indicates, to a second network device, that a multicast and broadcast radio bearer does not need to be reconfigured for the terminal device, the communication method may include S1001 to S1003.

S1001: A first network device sends a radio resource control release message to a terminal device that joins a multicast session, where the radio resource control release message indicates the terminal device to be released to a non-connected state.

Correspondingly, the terminal device receives the radio resource control release message.

For S1001, refer to the descriptions of S501. Details are not described again.

S1002: The terminal device sends indication information to the second network device, where the indication information indicates that the multicast and broadcast radio bearer does not need to be reconfigured for the terminal device.

Correspondingly, the second network device receives the indication information.

For example, the terminal device may send a message including the indication information to the second network device, to indicate that the second network device does not need to reconfigure the MRB for the terminal device.

The second network device may not perform, as indicated by the indication information, an operation of reconfiguring the MRB for the terminal device.

S1003: The second network device does not reconfigure the MRB for the terminal device.

It may be understood that during actual implementation, there is no actual step of S1003, and the second network device does not perform the operation of reconfiguring the MRB for the terminal device. S1003 is used for representation in FIG. 10 merely for better description.

In this embodiment, the terminal device sends the indication information to the second network device, to indicate whether the second network device needs to reconfigure the MRB for the terminal device that joins the multicast session, so that when the terminal device accesses the second network device, the second network device can determine whether to reconfigure the MRB for the terminal device. Therefore, a decision basis for reconfiguring the MRB is provided for the second network device.

Based on the embodiments shown in FIG. 9 and FIG. 10, the embodiments actually separately provide a communication method applied to a terminal device and a communication method applied to a second network device. In the communication method applied to the terminal device, the terminal device may receive a radio resource control release message from a first network device, where the radio resource control release message indicates the terminal device to be released to a non-connected state; and the terminal device may send indication information to a second network device, where the indication information indicates whether a multicast and broadcast radio bearer needs to be reconfigured for the terminal device. In the communication method applied to the second network device, the second network device may receive indication information from a terminal device. When the indication information indicates that a multicast and broadcast radio bearer needs to be reconfigured for the terminal device, the second network device may send a reconfigured multicast and broadcast radio bearer to the terminal device. When the indication information indicates that a multicast and broadcast radio bearer does not need to be reconfigured for the terminal device, the second network device may not reconfigure the multicast and broadcast radio bearer for the terminal device.

In a possible design, in the embodiments shown in FIG. 9 and FIG. 10, the indication information may include camped cell information of the terminal device, and the camped cell information indicates whether the multicast and broadcast radio bearer needs to be reconfigured for the terminal device.

During an implementation, the camped cell information may include information about all cells on which the terminal device has camped. When at least one cell in the information about all the cells on which the terminal device has camped is not packet data convergence protocol synchronized, the camped cell information indicates that the multicast and broadcast radio bearer needs to be reconfigured for the terminal device.

For example, the indication information may include a list of all the cells on which the terminal device has camped. After receiving the indication information, the second network device may determine, based on the list of all the cells on which the terminal device has camped, whether at least one cell in the information about all the cells on which the terminal device has camped is not packet data convergence protocol (packet data convergence protocol, PDCP) synchronized. When at least one cell is not PDCP synchronized, it indicates that the indication information indicates that the multicast and broadcast radio bearer needs to be reconfigured for the terminal device, and the second network device may reconfigure the multicast and broadcast radio bearer for the terminal device. Alternatively, when all the cells are PDCP synchronized, it indicates that the indication information indicates that the multicast and broadcast radio bearer does not need to be reconfigured for the terminal device, and the second network device may not reconfigure the multicast and broadcast radio bearer for the terminal device.

In another implementation, the camped cell information indicates whether all cells on which the terminal device has camped are packet data convergence protocol synchronized. When at least one cell of all the cells on which the terminal device has camped is not packet data convergence protocol synchronized, the camped cell information indicates that the multicast and broadcast radio bearer needs to be reconfigured for the terminal device.

Different from the foregoing implementation, in this implementation, the camped cell information may directly indicate a result of whether all the cells on which the terminal device has camped are PDCP synchronized. For example, the camped cell information may indicate that at least one cell is not PDCP synchronized, or indicate that all the cells are PDCP synchronized. Similarly, when at least one cell is not PDCP synchronized, the second network device may reconfigure the multicast and broadcast radio bearer for the terminal device. Alternatively, when all the cells are PDCP synchronized, the second network device may not reconfigure the multicast and broadcast radio bearer for the terminal device.

In other words, all the cells on which the terminal device has camped are PDCP numbers generated based on packet header information (MBS QFI SN) of a data packet of a core network. If the terminal device has camped on a cell that is not PDCP synchronized, a PDCP variable (for example, an HFN) of the terminal device is reset, and cannot be aligned with a PDCP variable of a synchronized cell. The terminal device may report only whether the terminal device has experienced an unsynchronized cell, to indicate whether the second network device is to reconfigure the multicast and broadcast radio bearer for the terminal device. This manner reduces more signaling, and delivers complexity to the terminal device.

In still another implementation, the camped cell information indicates whether a previous cell on which the terminal device has camped is packet data convergence protocol synchronized. When the previous cell on which the terminal device has camped is not packet data convergence protocol synchronized, the camped cell information indicates that the multicast and broadcast radio bearer needs to be reconfigured for the terminal device.

In this implementation, the terminal device may report, to the second network device by using the indication information, whether the previous cell on which the terminal device has camped is PDCP synchronized, and the second network device may determine, based on whether the previous cell on which the terminal device has camped is PDCP synchronized, whether the MRB is to be reconfigured. For example, when the previous cell on which the terminal device has camped is not PDCP synchronized, the second network device reconfigures the MRB; or when the previous cell on which the terminal device has camped is PDCP synchronized, the second network device does not reconfigure the MRB.

In this design, the second network device may be indicated, by using the camped cell information of the terminal device, whether the multicast and broadcast radio bearer needs to be reconfigured, the terminal device does not need to determine whether to reconfigure the MRB, and the terminal device provides only a decision basis for the second network device.

In another possible design, in the embodiments shown in FIG. 9 and FIG. 10, the indication information may alternatively indicate only a result of whether the MRB needs to be reconfigured.

For example, the terminal device may determine, based on camped cell information, whether the second network device needs to reconfigure the multicast and broadcast radio bearer for the terminal device. For a determining manner, refer to the foregoing determining manner of the second network device. Details are not described again. The terminal device may indicate, to the second network device by using the indication information, whether the multicast and broadcast radio bearer needs to be reconfigured for the terminal device.

In this design, logic of determining whether the second network device needs to reconfigure the multicast and broadcast radio bearer for the terminal device may be implemented on a terminal device side. The second network device may perform a result based on the indication information reported by the terminal device, for example, reconfigure the MRB or not reconfigure the MRB.

Optionally, in this design, when the indication information includes the camped cell information of the terminal device in any one of the foregoing implementations, reconfiguring the MRB may be that the second network device indicates the UE to perform PDCP reconfiguration or all of a part of the PDCP reconfiguration. For example, refer to the descriptions in the implementation of re-establishing the MRB in the foregoing embodiment, and the UE is indicated to re-establish a PDCP entity and perform PDCP configuration, while RLC, MAC, and PHY configurations may be reconfigured or may not be reconfigured.

In some other possible designs, for the indication information sent by the terminal device to the second network device, refer to the indication information sent by the first network device to the second network device in the foregoing embodiment for implementation. For example, the indication information sent by the terminal device to the second network device may include one or more of the following: the indication information indicates whether the terminal device is released to the non-connected state to receive a multicast service, the indication information indicates the information about the multicast service received by the terminal device that is released to the non-connected state, the indication information includes suspension configuration information, the indication information includes the radio resource control connection release message, and the indication information indicates MRB information used for receiving the multicast service by the terminal device that is released to the non-connected state.

For example, in this design, the indication information may be a 1-bit indication field (refer to the foregoing descriptions), a TMGI list, suspendConfig information, and an RRC release message.

Optionally, in embodiments of this application, the terminal device may send information such as the camped cell information (refer to the foregoing descriptions), the TMGI list, the suspendConfig information, and the RRC release message to the second network device according to a protocol. However, the terminal device does not sense a purpose of the information, to be specific, the terminal device may not need to determine whether the information indicates whether the MRB is to be reconfigured. The second network device that receives the information may still determine, based on the information, whether to reconfigure the MRB.

In a possible design, in the embodiments shown in FIG. 9 and FIG. 10, the indication information may be sent by using a radio resource control resume request message and/or a radio resource control resume complete message. The step of sending, by the terminal device, the indication information to the second network device may include: sending a radio resource control resume request message to the second network device, where the radio resource control resume request message includes the indication information; and/or sending a radio resource control resume complete message to the second network device, where the radio resource control resume complete message includes the indication information.

Correspondingly, the second network device may receive the radio resource control resume request message from the terminal device, and/or receive the radio resource control resume complete message from the terminal device, where the radio resource control resume complete message includes the indication information.

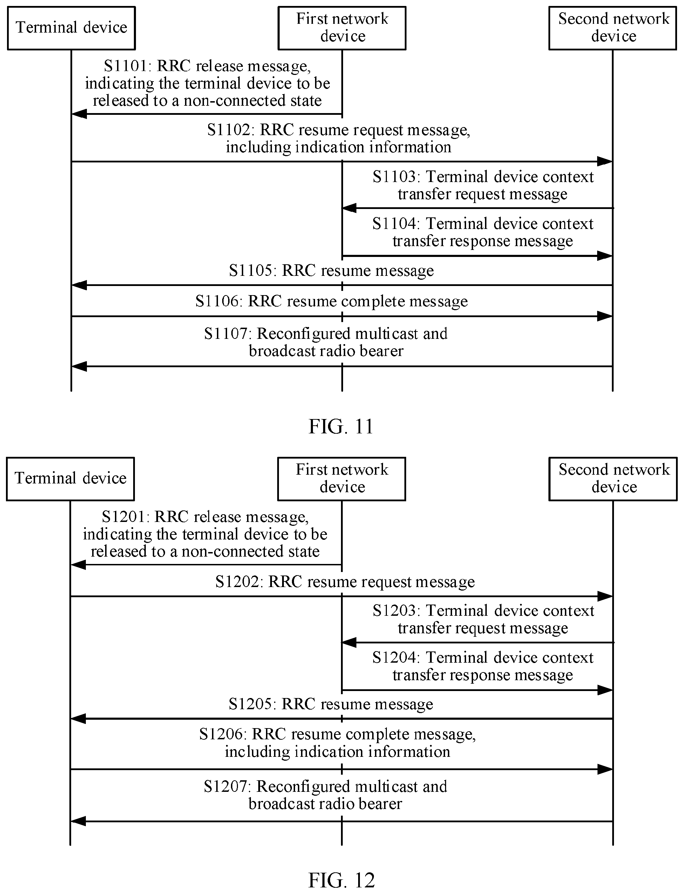

For example, FIG. 11 is still another schematic flowchart of a communication method according to an embodiment of this application. As shown in FIG. 11, the communication method may include S1101 to S1107.

S1101: A first network device sends an RRC release message to a terminal device that joins a multicast session, where the RRC release message indicates the terminal device to be released to a non-connected state.

Correspondingly, the terminal device receives the RRC release message.

For S1101, refer to the descriptions of S801. Details are not described again.

S1102: The terminal device sends an RRC resume request message to a second network device, where the RRC resume request message includes indication information.

Correspondingly, the second network device receives the RRC resume request message.

For S1102, refer to the descriptions of S802. A difference lies in that the RRC resume request message includes the indication information, and the indication information may indicate whether an MRB needs to be reconfigured.

S1103: The second network device sends a terminal device context transfer request message to the first network device.

Correspondingly, the first network device receives the terminal device context transfer request message.

For S1103, refer to the descriptions of S803. Details are not described again.

S1104: The first network device sends a terminal device context transfer response message to the second network device.

Correspondingly, the second network device receives the terminal device context transfer response message.

S1105: The second network device sends an RRC resume message to the terminal device.

Correspondingly, the terminal device receives the RRC resume message.

S1106: The terminal device sends an RRC resume complete message to the second network device.

Correspondingly, the second network device receives the RRC resume complete (RRCResumeComplete) message.

For example, after access of the terminal device, the second network device may perform S1107 to reconfigure the MRB for the terminal device.

S1107: The second network device sends a reconfigured multicast and broadcast radio bearer to the terminal device.

Correspondingly, the terminal device receives the reconfigured multicast and broadcast radio bearer.

For S1107, refer to the descriptions of S503. Details are not described again. It may be understood that when the indication information indicates that the MRB does not need to be reconfigured, S1107 is not performed.

For another example, FIG. 12 is still another schematic flowchart of a communication method according to an embodiment of this application. As shown in FIG. 12, the communication method may include S1201 to S1207.

S1201: A first network device sends an RRC release message to a terminal device that joins a multicast session, where the RRC release message indicates the terminal device to be released to a non-connected state.

Correspondingly, the terminal device receives the RRC release message.

For S1201, refer to the descriptions of S801. Details are not described again.

S1202: The terminal device sends an RRC resume request message to a second network device.

Correspondingly, the second network device receives the RRC resume request message.

For S1202, refer to the descriptions of S802.

S1203: The second network device sends a terminal device context transfer request message to the first network device.

Correspondingly, the first network device receives the terminal device context transfer request message.

For S1203, refer to the descriptions of S803. Details are not described again.

S1204: The first network device sends a terminal device context transfer response message to the second network device.

Correspondingly, the second network device receives the terminal device context transfer response message.

S1205: The second network device sends an RRC resume message to the terminal device.

Correspondingly, the terminal device receives the RRC resume message.

S1206: The terminal device sends an RRC resume complete message to the second network device, where the RRC resume complete request message includes indication information.

Correspondingly, the second network device receives the RRC resume complete (RRCResumeComplete) message. The indication information included in the RRC resume complete message may indicate whether an MRB needs to be reconfigured.

For example, after access of the terminal device, the second network device may perform S1207 to reconfigure the MRB for the terminal device.

S1207: The second network device sends a reconfigured multicast and broadcast radio bearer to the terminal device.

Correspondingly, the terminal device receives the reconfigured multicast and broadcast radio bearer.

For S1207, refer to the descriptions of S503. Details are not described again. It may be understood that when the indication information indicates that the MRB does not need to be reconfigured, S1207 is not performed.

In some other examples, both the RRC resume message and the RRC resume complete message may include the indication information. This is not limited herein.

In this design, the indication information may be sent by using the radio resource control resume request message and/or the radio resource control resume complete message, so that an existing radio resource control resume request message and/or an existing radio resource control resume complete message can indicate, to the second network device, whether the multicast and broadcast radio bearer needs to be reconfigured for the terminal device, so that signaling overheads can be reduced and implementation costs can be reduced.

Optionally, the RRC resume message may be referred to as a msg3, and the RRC resume complete message may be referred to as a msg5. The msg5 has a larger message space. When the indication information is sent in the msg5, the message space can be better used.

The foregoing embodiments separately describe two cases in which the first network device indicates the second network device whether to reconfigure the multicast and broadcast radio bearer for the terminal device, and the terminal device indicates the second network device whether to reconfigure the multicast and broadcast radio bearer for the terminal device. In some other embodiments of this application, the indication information may alternatively not be sent to the second network device, and the second network device mandatorily reconfigures the MRB for the UE after the access of the UE is completed.

For example, an embodiment of this application further provides a communication method, which may be applied to a second network device. In the method, after receiving a radio resource control resume complete message sent by a terminal device, the second network device may mandatorily perform an operation of reconfiguring an MRB for the terminal device, for example, may send a reconfigured multicast and broadcast radio bearer to the terminal device.

Optionally, in a possible design, the second network device may further obtain capability information of the terminal device, where the capability information of the terminal device includes whether the terminal device supports receiving of a multicast service in a non-connected state. The operation of reconfiguring the MRB may be mandatorily performed only for the terminal device that supports receiving of the multicast service in the non-connected state. For example, when the terminal device supports receiving of the multicast service in the non-connected state, the second network device reconfigures the multicast and broadcast radio bearer for the terminal device.

In this embodiment, the second network device may support sending of the multicast service to a UE in the non-connected state, or may not support sending of the multicast service to a UE in the non-connected state. This is not limited in this application.

It may be understood that, for any one of the foregoing embodiments, the second network device may clearly determine whether an MRB needs to be reconfigured for a UE. This can reduce MRB configuration exceptions on a UE side, and reduce cases in which MBS multicast data cannot be normally received.

The foregoing mainly describes the solutions provided in embodiments of this application from a perspective of interaction between the network elements. It may be understood that, to implement the foregoing functions, the network elements such as the first network device, the second network device, and the terminal device include corresponding hardware structures and/or software modules for performing the functions.

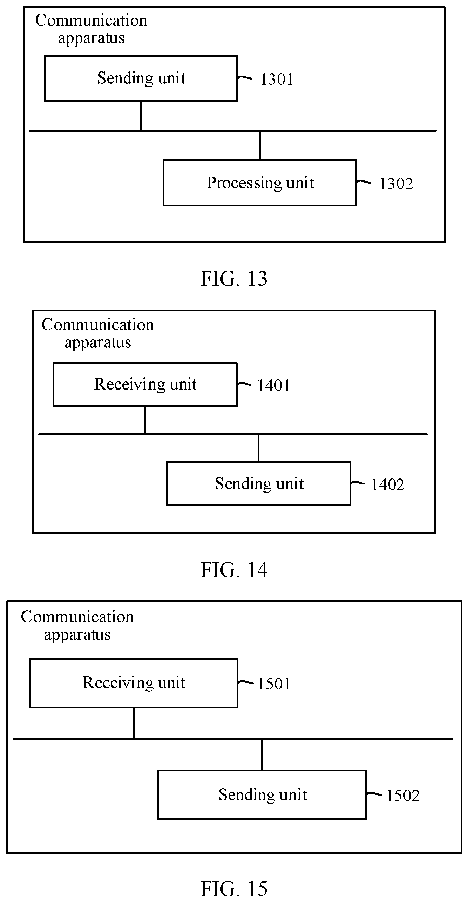

For example, for the foregoing scenario in which the first network device sends the indication information to the second network device, an embodiment of this application may further provide a communication apparatus that may be used in the first network device. FIG. 13 is a diagram of a structure of a communication apparatus according to an embodiment of this application.

As shown in FIG. 13, the communication apparatus may include a sending unit 1301.

The sending unit 1301 is configured to send a radio resource control release message to a terminal device that joins a multicast session, where the radio resource control release message indicates the terminal device to be released to a non-connected state. The sending unit 1301 is further configured to send indication information to a second network device, where the indication information indicates whether a multicast and broadcast radio bearer needs to be reconfigured for the terminal device.

In a possible design, when the terminal device is released to the non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In a possible design, the indication information specifically indicates whether the terminal device is released to the non-connected state to receive the multicast service; the indication information specifically indicates information about the multicast service received by the terminal device that is released to the non-connected state; or the indication information includes suspension configuration information, where the suspension configuration information indicates information about the multicast service received by the terminal device that is released to the non-connected state.

In a possible design, the indication information includes the radio resource control connection release message, and the radio resource control connection release message includes the suspension configuration information.

In a possible design, the apparatus further includes a processing unit 1302, configured to determine capability information of the second network device, where the capability information includes whether sending of the multicast service to the terminal device in the non-connected state is supported.

The sending unit 1301 is specifically configured to send the indication information to the second network device when the second network device supports sending of the multicast service to the terminal device in the non-connected state.

In a possible design, the processing unit 1302 is specifically configured to: when an Xn interface with the second network device is established or modified, determine the capability information of the second network device; determine the capability information of the second network device based on a terminal device context transfer request message from the second network device; or determine the capability information of the second network device based on operations, administration, and maintenance configuration information.

In a possible design, the sending unit 1301 is specifically configured to: send, to the second network device, a terminal device context transfer response message corresponding to the terminal device, where the terminal device context transfer response message includes the indication information; send the indication information to at least one network device in a wireless coverage area of the first network device, where the at least one network device includes the second network device; or send the indication information to the second network device by using a paging message.

Optionally, the communication apparatus shown in FIG. 13 may further include a receiving unit (not shown in the figure), configured to implement a receiving function, for example, receive information from the second network device or the terminal device.

For another example, for the foregoing scenario in which the first network device sends the indication information to the second network device, an embodiment of this application may further provide a communication apparatus that may be used in the second network device. FIG. 14 is another diagram of a structure of a communication apparatus according to an embodiment of this application.

As shown in FIG. 14, the communication apparatus may include a receiving unit 1401 and a sending unit 1402.

The receiving unit 1401 is configured to receive indication information from a first network device, where the indication information indicates whether a multicast and broadcast radio bearer needs to be reconfigured for a terminal device, and the terminal device is a terminal device that joins a multicast session. The sending unit 1402 is configured to: when the indication information indicates that the multicast and broadcast radio bearer needs to be reconfigured for the terminal device, send a reconfigured multicast and broadcast radio bearer to the terminal device.

In a possible design, when the terminal device is released to a non-connected state to receive a multicast service, the indication information indicates that the multicast and broadcast radio bearer needs to be reconfigured for the terminal device; or when the multicast session joined by the terminal device has no data temporarily or the multicast session is deactivated, the indication information indicates that the multicast and broadcast radio bearer does not need to be reconfigured for the terminal device.

In a possible design, the indication information specifically indicates whether the terminal device is released to the non-connected state to receive the multicast service; the indication information specifically indicates information about the multicast service received by the terminal device that is released to the non-connected state, or the indication information includes suspension configuration information, where the suspension configuration information indicates information about the multicast service received by the terminal device that is released to the non-connected state.

When the indication information indicates that the terminal device is released to the non-connected state to receive the multicast service, the sending unit 1402 is specifically configured to send, to the terminal device, a multicast and broadcast radio bearer reconfigured for all multicast services of the terminal device.

Alternatively, when the indication information indicates the information about the multicast service received by the terminal device that is released to the non-connected state, or the indication information includes the suspension configuration information, the sending unit 1402 is specifically configured to send, to the terminal device, a multicast and broadcast radio bearer reconfigured for the multicast service received by the terminal device that is released to the connected state.

In a possible design, the indication information includes a radio resource control connection release message, and the radio resource control connection release message includes the suspension configuration information.

In a possible design, the second network device supports sending of the multicast service to the terminal device in the non-connected state.

In a possible design, the sending unit 1402 is further configured to: when an Xn interface with the first network device is established or modified, send capability information of the second network device to the first network device; send a terminal device context transfer request message to the first network device, where the terminal device context transfer request message includes capability information of the second network device; or operations, administration, and maintenance configuration information includes capability information of the second network device, where
the capability information includes whether sending of the multicast service to the terminal device in the non-connected state is supported.

In a possible design, the receiving unit 1401 is specifically configured to: receive, from the first network device, a terminal device context transfer response message corresponding to the terminal device, where the terminal device context transfer response message includes the indication information; or receive a paging message sent by the first network device, where the paging message includes the indication information.

For another example, for the foregoing scenario in which the terminal device sends the indication information to the second network device, an embodiment of this application may further provide a communication apparatus that may be used in the terminal device. FIG. 15 is still another diagram of a structure of a communication apparatus according to an embodiment of this application.

As shown in FIG. 15, the communication apparatus may include a receiving unit 1501 and a sending unit 1502.

The receiving unit 1501 is configured to receive a radio resource control release message from a first network device, where the radio resource control release message indicates the terminal device to be released to a non-connected state, and the terminal device is a terminal device that joins a multicast session. The sending unit 1502 is configured to send indication information to a second network device, where the indication information indicates whether a multicast and broadcast radio bearer needs to be reconfigured for the terminal device.

In a possible design, the indication information includes camped cell information of the terminal device, and the camped cell information indicates whether the multicast and broadcast radio bearer needs to be reconfigured for the terminal device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

In a possible design, the sending unit 1502 is specifically configured to: send a radio resource control resume request message to the second network device, where the radio resource control resume request message includes the indication information; and/or send a radio resource control resume complete message to the second network device, where the radio resource control resume complete message includes the indication information.

In a possible design, the receiving unit 1501 is further configured to receive a multicast and broadcast radio bearer reconfigured by the second network device for the terminal device.

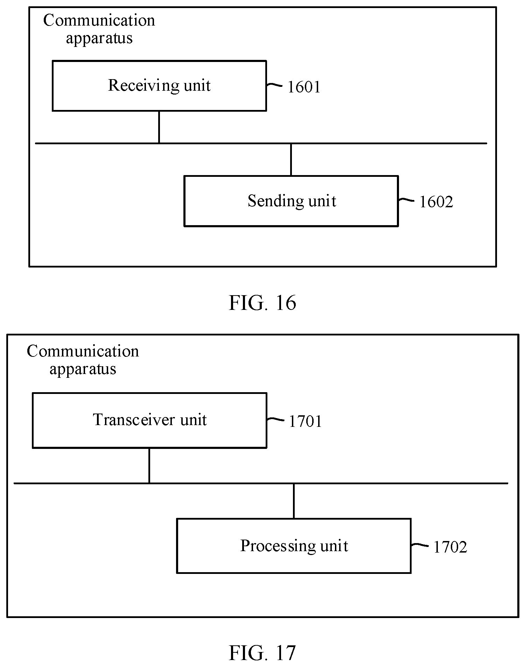

For another example, for the foregoing scenario in which the terminal device sends the indication information to the second network device, an embodiment of this application may further provide a communication apparatus that may be used in the second network device. FIG. 16 is still another diagram of a structure of a communication apparatus according to an embodiment of this application.

As shown in FIG. 16, the communication apparatus may include a receiving unit 1601 and a sending unit 1602.

The receiving unit 1601 is configured to receive indication information from a terminal device, where the terminal device is a terminal device that joins a multicast session, and the indication information indicates whether a multicast and broadcast radio bearer needs to be reconfigured for the terminal device. The sending unit 1602 is configured to: when the indication information indicates that the multicast and broadcast radio bearer needs to be reconfigured for the terminal device, send a reconfigured multicast and broadcast radio bearer to the terminal device.

In a possible design, the indication information includes camped cell information of the terminal device, and the camped cell information indicates whether the multicast and broadcast radio bearer needs to be reconfigured for the terminal device.

In a possible design, the camped cell information includes information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device; the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

In a possible design, the receiving unit 1601 is specifically configured to: receive a radio resource control resume request message from the terminal device, where the radio resource control resume request message includes the indication information; and/or receive a radio resource control resume complete message from the terminal device, where the radio resource control resume complete message includes the indication information.

Similarly, for the foregoing scenario in which the second network device mandatorily reconfigures the MRB, an embodiment of this application may further provide a communication apparatus used in the second network device. The communication apparatus may include a hardware structure and/or a software module that can implement a function of the second network device, for example, a sending unit or a receiving unit. Details are not described herein again.

It should be understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit with a signal processing capability. During an implementation, steps in the foregoing methods or the foregoing units may be implemented by using a hardware integrated logic circuit in a processor element, or may be implemented in a form of software invoked by the processing element.

In an example, the unit in any one of the foregoing units in the apparatus may be one or more integrated circuits configured to implement the foregoing methods, for example, one or more ASICs, one or more DSPs, one or more FPGAs, or a combination of at least two of the integrated circuit forms.

For another example, when the unit in the apparatus may be implemented in a form of scheduling a program by the processing element, the processing element may be a general-purpose processor, for example, a CPU or another processor that can invoke the program. For another example, the units may be integrated and implemented in a form of a system-on-a-chip (system-on-a-chip, SoC).

The foregoing unit for receiving is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a unit for sending, the unit for sending is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus, which may be used in the first network device, the second network device, or the terminal device. The communication apparatus may include a processor and an interface circuit. There may be one or more processors.

When the communication apparatus is used in the first network device, the processor is configured to: communicate with another apparatus through the interface circuit, and perform the steps performed by the first network device in the foregoing methods.

When the communication apparatus is used in the second network device, the processor is configured to: communicate with another apparatus through the interface circuit, and perform the steps performed by the second network device in the foregoing methods.

When the communication apparatus is used in the terminal device, the processor is configured to: communicate with another apparatus through the interface circuit, and perform the steps performed by the terminal device in the foregoing methods.

During an implementation, units that are of the first network device, the second network device, or the terminal device and that respectively implement corresponding steps in the foregoing methods may be implemented in a form of scheduling a program by a processing element. For example, an apparatus used for the first network device, the second network device, or the terminal device may include a processing element and a storage element. The processing element invokes a program stored in the storage element, to perform the corresponding method performed by the first network device or the second network device in the foregoing method embodiments. The storage element may be a storage element, namely, an on-chip storage element, located on a same chip as the processing element.

In another implementation, a program used to perform the method performed by the first network device, the second network device, or the terminal device in the foregoing method may be in a storage element, namely, an off-chip storage element, located on a different chip from the processing element. In this case, the processing element invokes or loads the program from the off-chip storage element to the on-chip storage element, to invoke and perform the corresponding method performed by the first network device, the second network device, or the terminal device in the foregoing method embodiments.

For example, an embodiment of this application may further provide a communication apparatus. The communication apparatus may include a processor, configured to execute computer instructions stored in a memory. When the computer instructions are executed, the apparatus is caused to perform the method performed by the first network device, the second network device, or the terminal device. The memory may be located inside or outside the communication apparatus. In addition, there are one or more processors.

In still another implementation, the units of the first network device, the second network device, or the terminal device that implement the steps in the foregoing methods may be configured as one or more processing elements. The processing elements may be correspondingly disposed in the first network device, the second network device, or the terminal device. The processing element herein may be an integrated circuit, for example, one or more ASICs, one or more DSPs, one or more FPGAs, or a combination of the types of integrated circuits. These integrated circuits may be integrated together to form a chip.

The units of the first network device, the second network device, or the terminal device that implement the steps in the foregoing methods may be integrated together, and implemented in a form of a SoC. The SoC chip is configured to implement a corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by invoking a program by the processing element, and functions of some units may be implemented in a form of the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be used in the first network device, the second network device, or the terminal device. The chip system includes one or more interface circuits and one or more processors. The interface circuit and the processor are interconnected through a line. The processor receives computer instructions from a memory of an electronic device through the interface circuit and executes the computer instructions, to implement the method performed by the corresponding first network device, second network device, or terminal device in the foregoing method embodiments. For the first network device, the second network device, or the terminal device, the electronic device may be the network device, the terminal device, or a device in the network device or the terminal device, or may be another device that communicates with the network device or the terminal device.

Based on the foregoing descriptions of the implementations, a person skilled in the art may clearly understand that, for the purpose of convenient and brief description, the division into the foregoing functional modules is merely used as an example for description. During actual application, the foregoing functions can be allocated to different functional modules for implementation as required, in other words, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, in other words, may be located in one place, or may be distributed in a plurality of different places. Some or all of the units may be selected based on actual requirements to implement the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the methods in embodiments of this application. The foregoing storage medium includes any medium that can store program code, for example, a USB flash drive, a removable hard disk, a ROM, a RAM, a magnetic disk, or an optical disc.

For example, an embodiment of this application may further provide a computer-readable storage medium, including computer software instructions. When the computer software instructions are run on a first network device or a chip built in the first network device, the first network device may be caused to perform the method performed by the first network device in the foregoing embodiments.

Alternatively, when the computer software instructions are run on a second network device or a chip built in the second network device, the second network device is caused to perform the method performed by the second network device in the foregoing embodiments.

Alternatively, when the computer software instructions are run on a terminal device or a chip built in the terminal device, the terminal device is caused to perform the method performed by the terminal device in the foregoing embodiments.

Optionally, an embodiment of this application further provides a communication apparatus. FIG. 17 is still another diagram of a structure of a communication apparatus according to an embodiment of this application. As shown in FIG. 17, the communication apparatus may include a transceiver unit 1701 and a processing unit 1702. The transceiver unit 1701 may be configured to send and receive information, or configured to communicate with another network element. The processing unit 1702 may be configured to process data. For example, the apparatus may implement, by using the transceiver unit 1701 and the processing unit 1702, the method performed by the first network device, the second network device, or the terminal device.

Optionally, an embodiment of this application further provides a computer program product. When the computer program product is executed, the method performed by the first network device, the second network device, or the terminal device may be implemented.

Based on the foregoing embodiments, an embodiment of this application further provides a communication system, including a first network device and a second network device. The first network device performs the method performed by the first network device in the foregoing embodiments, and the second network device performs the method performed by the second network device in the foregoing embodiments.

An embodiment of this application further provides a communication system, including a terminal device and a second network device. The terminal device performs the method performed by the terminal device in the foregoing embodiments, and the second network device performs the method performed by the second network device in the foregoing embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a first network device, and the method comprises:
sending a radio resource control release message to a terminal device that joins a multicast session, wherein the radio resource control release message indicates the terminal device to be released to a non-connected state; and
sending indication information to a second network device, wherein the indication information indicates whether a multicast and broadcast radio bearer needs to be reconfigured for the terminal device.

2. The method according to claim 1, wherein when the terminal device is released to the non-connected state to receive a multicast service, the indication information indicates that the multicast and broadcast radio bearer needs to be reconfigured for the terminal device; or
when the multicast session joined by the terminal device has no data temporarily or the multicast session is deactivated, the indication information indicates that the multicast and broadcast radio bearer does not need to be reconfigured for the terminal device.

3. The method according to claim 1 or 2, wherein the indication information specifically indicates whether the terminal device is released to the non-connected state to receive the multicast service;
the indication information specifically indicates information about the multicast service received by the terminal device that is released to the non-connected state; or
the indication information comprises suspension configuration information, wherein the suspension configuration information indicates information about the multicast service received by the terminal device that is released to the non-connected state.

4. The method according to claim 3, wherein the indication information comprises the radio resource control release message, and the radio resource control connection release message comprises the suspension configuration information.

5. The method according to any one of claims 1 to 4, wherein the method further comprises:
determining capability information of the second network device, wherein the capability information comprises whether sending of the multicast service to the terminal device in the non-connected state is supported; and
the sending the indication information to the second network device comprises:
sending the indication information to the second network device when the second network device supports sending of the multicast service to the terminal device in the non-connected state.

6. The method according to claim 5, wherein the determining the capability information of the second network device comprises:
when an Xn interface with the second network device is established or modified, determining the capability information of the second network device;
determining the capability information of the second network device based on a terminal device context transfer request message from the second network device; or
determining the capability information of the second network device based on operations, administration, and maintenance configuration information.

7. The method according to any one of claims 1 to 6, wherein the sending the indication information to the second network device comprises:
sending, to the second network device, a terminal device context transfer response message corresponding to the terminal device, wherein the terminal device context transfer response message comprises the indication information;
sending the indication information to at least one network device in a wireless coverage area of the first network device, wherein the at least one network device comprises the second network device; or
sending the indication information to the second network device via a paging message.

8. A communication method, wherein the method is applied to a second network device, and the method comprises:
receiving indication information from a first network device, wherein the indication information indicates whether a multicast and broadcast radio bearer needs to be reconfigured for a terminal device, and the terminal device is a terminal device that joins a multicast session; and
when the indication information indicates that the multicast and broadcast radio bearer needs to be reconfigured for the terminal device, sending a reconfigured multicast and broadcast radio bearer to the terminal device.

9. The method according to claim 8, wherein when the terminal device is released to a non-connected state to receive a multicast service, the indication information indicates that the multicast and broadcast radio bearer needs to be reconfigured for the terminal device; or
when the multicast session joined by the terminal device has no data temporarily or the multicast session is deactivated, the indication information indicates that the multicast and broadcast radio bearer does not need to be reconfigured for the terminal device.

10. The method according to claim 8 or 9, wherein the indication information specifically indicates whether the terminal device is released to the non-connected state to receive the multicast service;
the indication information specifically indicates information about the multicast service received by the terminal device that is released to the non-connected state; or
the indication information comprises suspension configuration information, wherein the suspension configuration information indicates information about the multicast service received by the terminal device that is released to the non-connected state; and
when the indication information indicates that the terminal device is released to the non-connected state to receive the multicast service, the sending the reconfigured multicast and broadcast radio bearer to the terminal device comprises:
sending, to the terminal device, a multicast and broadcast radio bearer reconfigured for all multicast services of the terminal device; or
when the indication information indicates the information about the multicast service received by the terminal device that is released to the non-connected state, or the indication information comprises the suspension configuration information, the sending the reconfigured multicast and broadcast radio bearer to the terminal device comprises:
sending, to the terminal device, the multicast and broadcast radio bearer reconfigured for the multicast service received by the terminal device that is released to the connected state.

11. The method according to claim 10, wherein the indication information comprises a radio resource control connection release message, and the radio resource control connection release message comprises the suspension configuration information.

12. The method according to any one of claims 8 to 11, wherein the second network device supports sending of the multicast service to the terminal device in the non-connected state.

13. The method according to claim 12, wherein the method further comprises:
when an Xn interface with the first network device is established or modified, sending capability information of the second network device to the first network device;
sending a terminal device context transfer request message to the first network device, wherein the terminal device context transfer request message comprises capability information of the second network device; or
operations, administration, and maintenance configuration information comprises capability information of the second network device, wherein
the capability information comprises whether sending of the multicast service to the terminal device in the non-connected state is supported.

14. The method according to any one of claims 8 to 13, wherein the receiving the indication information from the first network device comprises:
receiving, from the first network device, a terminal device context transfer response message corresponding to the terminal device, wherein the terminal device context transfer response message comprises the indication information; or
receiving a paging message sent by the first network device, wherein the paging message comprises the indication information.

15. A communication method, wherein the method is applied to a terminal device, and the method comprises:
receiving a radio resource control release message from a first network device, wherein the radio resource control release message indicates the terminal device to be released to a non-connected state; and
sending indication information to a second network device, wherein the indication information indicates whether a multicast and broadcast radio bearer needs to be reconfigured for the terminal device.

16. The method according to claim 15, wherein the indication information comprises camped cell information of the terminal device, and the camped cell information indicates whether the multicast and broadcast radio bearer needs to be reconfigured for the terminal device.

17. The method according to claim 16, wherein the camped cell information comprises information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device;
the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or
the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

18. The method according to any one of claims 15 to 17, wherein the sending the indication information to the second network device comprises:
sending a radio resource control resume request message to the second network device, wherein the radio resource control resume request message comprises the indication information; and/or
sending a radio resource control resume complete message to the second network device, wherein the radio resource control resume complete message comprises the indication information.

19. The method according to any one of claims 15 to 18, wherein the method further comprises:
receiving a multicast and broadcast radio bearer reconfigured by the second network device for the terminal device.

20. A communication method, wherein the method is applied to a second network device, and the method comprises:
receiving indication information from a terminal device, wherein the terminal device is a terminal device that joins a multicast session, and the indication information indicates whether a multicast and broadcast radio bearer needs to be reconfigured for the terminal device; and
when the indication information indicates that the multicast and broadcast radio bearer needs to be reconfigured for the terminal device, sending a reconfigured multicast and broadcast radio bearer to the terminal device.

21. The method according to claim 20, wherein the indication information comprises camped cell information of the terminal device, and the camped cell information indicates whether the multicast and broadcast radio bearer needs to be reconfigured for the terminal device.

22. The method according to claim 21, wherein the camped cell information comprises information about all cells on which the terminal device has camped; and when at least one cell in the information about all the cells on which the terminal device has camped is not packet data convergence protocol synchronized, the camped cell information indicates that the multicast and broadcast radio bearer needs to be reconfigured for the terminal device;
the camped cell information indicates whether all cells on which the terminal device has camped are packet data convergence protocol synchronized; and when at least one cell of all the cells on which the terminal device has camped is not packet data convergence protocol synchronized, the camped cell information indicates that the multicast and broadcast radio bearer needs to be reconfigured for the terminal device; or
the camped cell information indicates whether a previous cell on which the terminal device has camped is packet data convergence protocol synchronized; and when the previous cell on which the terminal device has camped is not packet data convergence protocol synchronized, the camped cell information indicates that the multicast and broadcast radio bearer needs to be reconfigured for the terminal device.

23. The method according to any one of claims 20 to 22, wherein the receiving the indication information from the terminal device comprises:
receiving a radio resource control resume request message from the terminal device, wherein the radio resource control resume request message comprises the indication information; and/or
receiving a radio resource control resume complete message from the terminal device, wherein the radio resource control resume complete message comprises the indication information.

24. A communication apparatus, wherein the apparatus comprises:
a sending unit, configured to send a radio resource control release message to a terminal device that joins a multicast session, wherein the radio resource control release message indicates the terminal device to be released to a non-connected state, wherein
the sending unit is further configured to send indication information to a second network device, wherein the indication information indicates whether a multicast and broadcast radio bearer needs to be reconfigured for the terminal device.

25. A communication apparatus, wherein the apparatus comprises:
a receiving unit, configured to receive indication information from a first network device, wherein the indication information indicates whether a multicast and broadcast radio bearer needs to be reconfigured for a terminal device, and the terminal device is a terminal device that joins a multicast session; and
a sending unit, configured to: when the indication information indicates that the multicast and broadcast radio bearer needs to be reconfigured for the terminal device, send a reconfigured multicast and broadcast radio bearer to the terminal device.

26. A communication apparatus, wherein the apparatus comprises:
a receiving unit, configured to receive a radio resource control release message from a first network device, wherein the radio resource control release message indicates a terminal device to be released to a non-connected state; and
a sending unit, configured to send indication information to a second network device, wherein the indication information indicates whether a multicast and broadcast radio bearer needs to be reconfigured for the terminal device.

27. A communication apparatus, wherein the apparatus comprises:
a receiving unit, configured to receive indication information from a terminal device, wherein the terminal device is a terminal device that joins a multicast session, and the indication information indicates whether a multicast and broadcast radio bearer needs to be reconfigured for the terminal device; and
a sending unit, configured to: when the indication information indicates that the multicast and broadcast radio bearer needs to be reconfigured for the terminal device, send a reconfigured multicast and broadcast radio bearer to the terminal device.

28. A communication apparatus, comprising a processor, configured to execute computer instructions stored in a memory, wherein when the computer instructions are executed, the apparatus is caused to perform the method according to any one of claims 1 to 7 or the method according to any one of claims 8 to 14.

29. A communication apparatus, comprising a processor, configured to execute computer instructions stored in a memory, wherein when the computer instructions are executed, the apparatus is caused to perform the method according to any one of claims 15 to 19 or the method according to any one of claims 20 to 23.

30. A computer-readable storage medium, comprising computer software instructions, wherein
when the computer software instructions are run on a network device or a chip built in the network device, the network device is caused to perform the method according to any one of claims 1 to 7 or the method according to any one of claims 8 to 14.

31. A computer-readable storage medium, comprising computer software instructions, wherein
when the computer software instructions are run on a terminal device or a chip built in the terminal device, the terminal device is caused to perform the method according to any one of claims 15 to 19.

32. A computer-readable storage medium, comprising computer software instructions, wherein
when the computer software instructions are run on a network device or a chip built in the network device, the network device is caused to perform the method according to any one of claims 20 to 23.

33. A communication system, comprising a first network device and a second network device, wherein
the first network device performs the method according to any one of claims 1 to 7; and
the second network device performs the method according to any one of claims 8 to 14.

34. A communication system, comprising a terminal device and a second network device, wherein
the terminal device performs the method according to any one of claims 15 to 19; and
the second network device performs the method according to any one of claims 20 to 23.
